# EUROPÄISCHE PATENTSCHRIFT

(11) **EP 3 242 068 B1**
(45) Veröffentlichungstag und Bekanntmachung des Hinweises auf die Patenterteilung: **16.09.2020**
(21) Anmeldenummer: 17000720.7
(22) Anmeldetag: 27.04.2017
(51) Int. Cl.: F16L 55/162, E21D 11/38, F16L 55/163

(54) **VERFAHREN ZUM DAUERHAFTEN ABDICHTEN EINER ROHRVERBINDUNG UND ROHRVERBINDUNG ZWISCHEN ZWEI ABWASSERROHRENDEN**
METHOD FOR PERMANENTLY SEALING A PIPE JOINT AND PIPE JOINT BETWEEN TWO WASTE WATER PIPE ENDS
PROCÉDÉ D'ÉTANCHÉITÉ DURABLE D'UNE LIAISON TUBULAIRE ET LIAISON TUBULAIRE ENTRE DEUX EXTRÉMITÉS DE TUYAU D'EAUX USÉES

(30) Priorität: 30.04.2016 DE 102016005290
(43) Veröffentlichungstag der Anmeldung: 08.11.2017
(73) Patentinhaber: Angrick, Frank, 46 359 Heiden (DE)
(72) Erfinder: Angrick, Frank, 46 359 Heiden (DE)
(74) Vertreter: Gehrke, Peter P.

(56) Entgegenhaltungen:
- WO-A2-2009/037051
- DE-B- 1 087 851
- DE-B- 1 166 565
- DE-U1-202010 011 337

## Beschreibung

Die Erfindung betrifft ein Verfahren zum dauerhaften Abdichten einer Rohrverbindung zwischen zwei flüssige Medien führenden Rohren, wie begehbaren Abwasserrohren, durch Einsetzen eines Dichtungsschlauches in eine in einem Stoßbereich von Enden der Rohre angeordnete Aufnahmenut, Ansetzen eines ringförmig ausgestalteten, in Umfangsrichtung quer geschlitzten Stahlbandes mit zwei Enden als Widerlager gegen den Dichtungsschlauch und eine dauerhafte hoch belastbare Rohrverbindung, z.B. Muffenverbindung, bestehend aus zwei Abwasserrohrenden mit einer in einem Druckübertragungsring als Druckübertragungseinrichtung ausgefrästen Aufnahmenut und einem zwischen einem Spitzende und einer Muffe angeordneten Druckübertragungsring und einem in die Aufnahmenut eingesetzten Dichtungsschlauch.

Die Betreiber von Abwasseranlagen, z.B. Abwasserkanälen, sind gehalten, den Nachweis zu erbringen, dass die Dichtheit von Abwasserleitungen auf Dauer sichergestellt ist. Der Zustand vieler Abwasserkanäle wird dieser Forderung in weiten Teilen jedoch nicht gerecht. Die Schätzungen, wie viele Kanäle und in welchem Ausmaß undicht sind, sind ungenau, da insbesondere in kleineren und ländlichen Gemeinden eine vollständige Inspektion noch nicht stattgefunden hat. Auch das Ausmaß der Schäden ist nicht ausreichend bekannt. Bei Untersuchungen wurde erkannt, dass die Rohrschäfte oder Rohre selbst noch vielfach in Ordnung sind, während die Rohrverbindungen der Abwasseranlagen, wie Muffen, die Schwachstellen darstellen.

Unter flüssige Medien werden im Sinne der Erfindung auch verstanden jedwede Flüssigkeiten, wie Abwässer, Grundwasser, Schmutzwasser, organische Lösungsmittel, usw.

Aufgrund der undichten Rohrverbindungen können Exfiltrationen und Infiltrationen auftreten, bei der Exfiltration gelangen Abwässer aus dem Rohrinneren in das die Rohrverbindung umgebende Erdreich, so dass das Erdreich und das in diesem befindliche Grundwasser mit den in den Abwässern befindlichen Schmutz- und Schadstoffen verunreinigt werden. Im Fall der Infiltration dringt Grundwasser in das Innere der Rohrverbindungen und der Rohre ein und verdünnt die Abwässer, so dass die Aufbereitung der Abwässer aufgrund der Volumenzunahme der Abwässer deutlich erschwert wird und die Klärung der Abwässer sich verteuert.

Für den westlichen Teil Deutschlands wird der Anteil der sanierungsbedürftigen Kanalleitungen in den alten deutschen Bundesländern auf ca. 25% bei einer Rohmetzlänge von 250 000 km geschätzt. Hinzu kommen noch ca. 600 000 km Hausanschlussleitungen mit meist unbekanntem Sanierungsbedarf. Der Sanierungsbedarf des ca. 36000 km langen Netzes in dem östlichen Teil Deutschlands wird nicht geringer eingeschätzt. Darüber hinaus ist der Sanierungsbedarf der begehbaren Rohre für Abwässer der öffentlichen Hand besonders hoch, zumal in Ballungsräumen begehbare Rohre den beträchtlichen Zulauf an Abwässern ohne Auftreten von Exfiltration und Infiltrationen weiterzuleiten haben, gleichwohl diese Erdverschiebungen und durch den Schwerlastverkehr erzeugten Erschütterungen ausgesetzt sind, so dass in Rohrverbindungen, wie Muffen, in Abhängigkeit von der Zeit erfahrungsgemäß Undichtigkeiten auftreten.

Von besonderer Bedeutung ist die Dichtheit der Abwasserkanäle in Trinkwasserschutzgebieten, da hier eine unmittelbare Gefährdung für die Trinkwasserversorgung besteht. Große Flächen von Trinkwasserschutzgebieten im Nahbereich von Städten sind bebaut und weisen eine nicht unerhebliche Kanalnetzlänge auf. In den letzten Jahren sind erhebliche Anstrengungen unternommen worden, geeignete Verfahren zur Schadensbehebung zu entwickeln. Für die Instandsetzung von Muffen oder zur Reparatur von Rissen ist eine Vielzahl von Lösungen auf dem Markt, die die Schadstellen mit Gelen oder Klebern auf 2-Komponenten-Basis oder Harzen dichten wollen. Ihre Brauchbarkeit wird unterschiedlich bewertet, ihre Zuverlässigkeit ist nicht immer zufriedenstellend.

So wird in der Druckschrift DE 20 2010 011337 ein herkömmliches System zur Abdichtung eines Rohrleitungssystems beschrieben, welches sowohl einen fluiddichten Schlauch zur Einbringung in dem Bereich des Spaltes zwischen zwei Rohren des abzudichtenden Rohrleitungssystems aufweist, der Schlauch mit einem ein Ventil enthaltendes Zuführelement zum Einbringen des Fluides in den Schlauch versehen und mit einer Pumpe zum Fördern des Fluids in den Schlauch verbunden ist. Bei Verbringen des herkömmlichen Systems zur Abdichtung eines Rohrleitungssystems in einem Erdreich wird infolge der häufig in dem Erdreich auftretenden Setzbewegungen desselben das Rohrleitungssystem beträchtlichen Kräften ausgesetzt, so dass das in der Muffe befindlichen Rohrende abknickt und hierdurch Undichtigkeiten im Stoßbereich der einander anliegen Rohrenden auftreten.

Auch wenn die z.B. als Glockenmuffe ausgestaltete Muffe als Widerlager für den Schlauch dient, zeigt sich, dass der Schlauch in den Spalt zwischen der Glockenmuffe des einen Rohrs und dem Rohrende des anderen Rohrs einzudringen oder hineinzurutschen vermag, sodass das Innere des herkömmlichen Rohrleitungssystems nach außen hin frei zugänglich wird.

Auch die in dieser Druckschrift vorgeschlagene Beaufschlagung des Schlauchs mit einem gegen den Schlauch angesetzten Ring vergrößert die Gefahr des Eindringens des Schlauches in den Spalt zwischen der Glockenmuffe und dem besagten Rohrende aufgrund des Fehlens eines hinreichenden Widerlagers für denselben.

Der weitere Vorschlag der Druckschrift, bei dem Ausrichten der beiden Rohrenden Stoß auf Stoß in dem Stoßbereich außenseitig eine Manschette gegen diesen Stoßbereich anzusetzen, ermöglicht zwar die zeitweilige Abdichtung des Stoßbereichs, jedoch bei Auftreten von durch den Versatz im Erdbereich hervorgerufenen Relativbewegungen der beiden Rohrenden ist liegt die Manschette nicht mehr flächig an der Außenseite des Stoßbereichs an, so dass ebenso hierdurch Undichtigkeiten im Stoßbereich auftreten.

Daher ist es Aufgabe der Erfindung, ein Verfahren zur dauerhaften Abdichtung einer als Muffenverbindung ausgebildeten Rohrverbindung bereitzuhalten, die bei Auftreten von Erdreichbewegungen eine dauerhafte Abdichtung möglich macht.

Gerade die dauerhafte Abdichtung zwischen den Rohrenden, die als Muffenverbindung ausgestaltet ist, ist erwünscht, da solche Rohrverbindungen unterhalb von stark befahrenen Straßen häufig eingesetzt sind und die gegenüber den durch das Befahren der Straßen mit Schwerlastverkehr auftretenden Erschütterungen und dem hierdurch hervorgerufenen Erdreichversatz eine zuverlässige Dichtheit der Muffenverbindung bereitstellen.

Von besonderer Bedeutung ist jedoch, dass die Materialien negativen Einfluss auf das Grundwasser ausüben können, was nach den gesetzlichen Bestimmungen, in Deutschland beispielsweise nach dem Wasserhaushaltsgesetz, den Tatbestand einer Gewässerverunreinigung erfüllen kann. Zwar können viele Stoffe in ausgehärtetem Zustand als nicht wassergefährdend, entsprechend der Wassergefährdungsklasse null, eingestuft werden und haben teilweise entsprechende Zertifikate. Problematisch ist dabei jedoch trotzdem die Aushärtungsphase zu bewerten, in der die Stoffe Grundwasser kontaminieren können oder in der nicht völlig ausgehärtete vermischte oder polymerisierte Einzelstoffe ins Grundwasser abwandern können.

Die Gefahr der Verunreinigung des Grundwassers ist besonders in Trinkwasserschutzgebieten von Bedeutung, so dass hier der Einsatz von Instandsetzungsmaßnahmen besonders kontrolliert angegangen werden muss, obwohl der Handlungsbedarf besonders hier sehr groß wäre, da durch undichte Muffen fortlaufende Kontamination durch Abwasser zu befürchten bzw. zu erwarten ist.

Ein weiteres Gebiet, in dem Bohrungen beziehungsweise mit Rohren versehene Grundwassermessstellen abgedichtet oder gegen Außendruck abgestützt werden müssen, sind Deponien oder Lagerplätze für Materialien, aus denen grundwassergefährdende Stoffe austreten können. Diese gerade in den letzten Jahren ständig an Zahl und Bedeutung zunehmenden Anwendungen stellen ein umwelttechnisch besonders sensibles Gebiet dar, so dass hierfür einfache und sichere Lösungen besonders gefragt sind. Für die Instandsetzung von Rohrverbindungen, wie Muffen, oder zur Reparatur von Rissen in diesen findet sich im Stand der Technik eine große Anzahl von herkömmlichen Lehren als Vorschläge.

Zur Sanierung von Muffen werden Kanalerneuerungen vorgeschlagen bei zerstörten oder hydraulisch nicht mehr ausreichenden Strängen, beispielsweise können in alten Leitungstrassen mit oder ohne Entfernung der alten Leitungen in offener oder geschlossener Bauweise diese erneuert werden. Lange Zeit waren die Kanalerneuerungen in offener Bauweise die häufig angewandten Verfahren. Der Vorteil dieser offenen Bauweise liegt in der jederzeit einsehbaren Arbeitsdurchführung und in der Arbeitsüberwachung. Nachteilig jedoch sind die hierfür erforderlichen Aufgrabungen und die damit verbundenen Störungen, insbesondere Verkehrsbehinderungen, Lärmbelästigung und Schmutz für die Anlieger sowie die Zeitdauer der Arbeiten. Um diese Beeinträchtigungen möglichst gering zu halten, wird oft rohrlängenweise gearbeitet und nicht, was für Gebrauchseigenschaften der Leitung günstiger wäre, haltungsweise.

Als Kanalerneuerung werden vorgeschlagen unter Beibehaltung des alten Leitungskörpers Roboter-, Beschichtungs-, Relining-, Injektions-, Berst-/Fräsverfahren oder Montageverfahren. So ist ein Verfahren zur Abdichtung einer Muffenverbindung bekannt, wobei in dem von der Muffenverbindung gebildeten Muffeninnenraum, der zwischen dem Spitzende des einen Rohrs und dem als glockenförmige Muffe ausgebildeten Ende des anderen Rohrs sich befindet, mit Hilfe von Düsennadeln Dichtungsmaterial mit hohem Druck eingespritzt und die Befüllung des Zwischenraums durch Kontroll-Düsennadeln überwacht werden. Die Kunststoffmasse, die eingespritzt wird, ist ein flüssiges Abdichtmittel. Dieses herkömmliche Verfahren zeichnet sich durch eine komplizierte und kontrollintensive Vorgehensweise der Muffenerneuerung aus, so dass der Kostenaufwand zur Muffenabdichtung beträchtlich ist.

Als herkömmliche Rohrverbindungen wird ein einen Hohlraum aufweisender Schlauch in einen die Muffe eines Rohres und das Spitzende eines weiteren Rohres überbrückenden Spalt gegen die Innenseite der Muffe angesetzt, der mit einem ein Ventil aufweisendes Zuführelement versehen ist, über welches der Hohlraum des Schlauches mit einem Fluid befüllbar ist. Nach dem Ansetzen des Schlauchs gegen die Innenseite der Muffe wird der Schlauch über sein Zuführelement durch Befüllung des Hohlraums mit dem Fluid aufgeblasen, so dass der Schlauch sich in Umfangsrichtung mit einer Kraft beaufschlagt und ein Teil des Schlauchs gegen die Innenseite der Muffe und das Spitzende gedrückt wird.

Es zeigt sich bei herkömmlichen Rohrverbindungen aber, dass aufgrund des aufgeblasenen Zustands des Schlauchs
der Schlauch nur teilflächig mit seiner Unterseite, z.B. auf den Druckübertragungsring, aufzuliegen vermag,
die Schlauchdicke in Umfangsrichtung aufgrund seines aufgeblasenen Zustands sich verändert,
der Schlauch seitlich an der an dem Schlauch anliegenden Manschette austritt und sich aufgrund des Überdrucks im Schlauch aufbläht,
und
der Schlauch nur, wenn überhaupt, auf Spalten und Risse im Bereich der Stoßfuge oder des Stoßbereichs aufliegt, aber nicht wegen seines aufgeblasenen Zustands in diese einzudringen vermag
sowie
die auf den Schlauch einwirkende Manschette das Überbrücken der Spalten und Risse durch den Schlauch zwar unterstützt, aber nicht dessen Eindringen in diese, so dass die Abdichtung der Risse und Spalten trotz Verwendung der Manschette sich als unzureichend auszeichnet.

Darüber hinaus zeigen sich weitere Nachteile herkömmlicher Rohrverbindungen
nicht nur das Erfordernis der steten Kontrolle des hohen Innendrucks des Schlauchs zwecks Aufrechterhaltung desselben
und
die Gefahr des Aufblähens des Schlauchs in seinen Seitenbereichen, die von der Manschette beabstandet sind,
sondern auch das Erfordernis der steten Überprüfung des Auftretens von Materialermüdungen des Schlauchs infolge
sowohl der Kraftbeaufschlagung des Schlauchs durch den hohen Innendruck,
als auch der Kraftbeaufschlagung des Schlauchs von außen durch die Manschette.

Da der Schlauch herkömmlicher Rohrverbindungen
nicht nur durch die von innen nach außen wirkende Kraft beaufschlagt wird infolge des vorgeschriebenen hohen Innendrucks zwecks Bereitstellung seines aufgeblasenen Zustands,
sondern hinzukommend durch die radial nach außen wirkende Kraft infolge der gegen den Schlauch angesetzten Manschette, der seinerseits mittels Spannrings elastisch gegen diese anliegt,
in Umfangsrichtung stark beansprucht wird, zeigen sich Folgen in dem elastischen Material des Schlauchs infolge der starken Beanspruchung, so dass der Schlauch aufgrund dessen zur Rissbildung neigt, die die Gefahr der Undichtigkeit der herkömmlichen Rohrverbindungen deutlich erhöht.

In dem Erdreich mit den miteinander verbundenen Rohrenden, die mit Hilfe herkömmlicher Rohrverbindungen abzudichten sind, treten Erschütterungen und Versatz auf, so dass die Rohrenden zueinander verschoben werden. Diese Relativverschiebungen führen zu einer unterschiedlichen Beabstandung der Seiten der Manschette zu den Seiten, Flanken oder Nutflanken auch genannt, als Teil der Stirnseiten, der Enden der Rohrverbindungen, so dass sich unterschiedliche Beabstandungen der Seiten der Manschette zu den der Manschette zugewandten Flanken der Stirnseiten der Enden der Rohre auftreten. Weil aber der Schlauch herkömmlicher Rohrverbindungen sich in einem steten hohen Innendruck zur Aufrechterhaltung seines aufgeblasenen Zustands befindet, tritt das seitliche Aufblähen des Schlauchs im Bereich größerer Beabstandung der Seiten der Manschette von den Flanken verstärkt auf, so dass Undichtigkeiten zwischen dem Schlauch und den dem Schlauch zugewandten Flanken der Stirnseiten, z.B. der Muffe und des einen Endes, die Folgen sind.

Ebenso eignen sich herkömmliche Rohrverbindungen mit einem Schlauch im aufgeblasenen Zustand nicht zur Abdichtung von gekrümmten Rohrverbindungen, da der Einsatz von an die Rohrverbindungskrümmung passgenau angefertigten Manschetten erforderlich machen würde, ein nachteiliger Umstand, der die Kosten und die Verbaudauer stark erhöht.

Ein weiterer Nachteil herkömmlicher Rohrverbindungen betrifft das fehlende Anliegen des Schlauchs mit seinen Seitenbereiche sowohl gegen die Nutflanken als auch sein fehlendes Eindringen in die Spalten und Risse der Nutflanken, da stets der Schlauch zum seitlichen Aufblähen zwischen Manschette und Nutflanken neigt und eine Gegenkraft gegen die von dem Spannring der Manschette erzeugte Kraft bildet.

Hinzutretend sind herkömmliche Rohrverbindungen von Nachteil, da nach dem Verbau der herkömmlichen Rohrverbindungen häufig sich durch Erdreichversatz Relativbewegungen zwischen den verbundenen Rohrenden einstellen, die zur Krümmung derselben führen und aufgrund der sich einstellenden Beabstandung zwischen der Manschette und den Nutflanken das seitliche Aufblähen des Schlauchs fördern, so dass Undichtigkeiten verständlicherweise sich einstellen.

Hinzukommend ist bei herkömmlichen Rohrverbindungen der Spannring gegen die Manschette angesetzt, jedoch ist der Spannring soweit elastisch, dass auch der Spannring der Materialermüdung unterliegt und die Spannkraft dauerhaft abnimmt mit der Folge des Nachgebens der Manschette gegenüber dem aufgeblasenen Schlauch, so dass Undichtigkeiten vorprogrammiert sind.

Ein weiterer Nachteil herkömmlicher Rohrverbindungen ist die fehlende Kombination des vollflächigen Anliegens des Schlauchs herkömmlicher Rohrverbindungen gegen die Nutflanken und den Nutgrund einerseits mit dem Eindringen des Schlauchs in Risse und Spalten der Nutflanken und des Nutgrundes andererseits, so dass herkömmliche Rohrverbindungen auf Relativbewegungen der Rohrenden zueinander oder voneinander empfindlich durch Auftreten von Undichtigkeiten reagieren, da der Schlauch zur Überbrückung von Spalten, nicht aber zum Eindringen in diese neigt.

Die vielfältigen Nachteile herkömmlicher Rohrverbindungen machen diese vollkommen unbrauchbar für den Dauereinsatz im Erdreich, so dass diese Erkenntnis auch durch die Beobachtung der fehlenden Verwendung solcher Rohrverbindungen im Erdverbau bestätigt wird.

Auch mit Hilfe eines anderen herkömmlichen Verfahrens zur Abdichtung einer Muffenverbindung, wird über genau zu justierende Düsennadeln Dichtungsmaterial mit hohem Druck in den von der Muffenverbindung gebildeten Muffeninnenraum, der zwischen dem Spitzende des einen Rohrs und dem als glockenförmige Muffe ausgebildeten Ende des anderen Rohrs angeordnet ist, eingespritzt und die Befüllung des Zwischenraums durch wiederum genau zu justierende Kontroll-Düsennadeln überwacht werden. Das Verfahren erfordert eine Vielzahl an genau zu überwachenden Verfahrensschritten die zu einem hohen Zeit- und Kostenaufwand führen. Darüber hinaus ermöglicht zwar das herkömmliche Verfahren das Einspritzen der Kunststoffmasse und Verschließen der Risse in der Muffenverbindung, jedoch ist die Überprüfung, ob tatsächlich die Muffenverbindung nunmehr abdichtend gehalten wird, nicht möglich, da der zwischen dem Spitzende und der Muffe befindliche Zwischenraum mit Kunststoffmasse verfüllt wird.

Ein weiteres herkömmliches Muffenabdichten betrifft ein Reliningverfahren, jedoch ist das Reliningverfahren kostenträchtig und führt zu einer Verringerung des Querschnitts der Leitungsfläche infolge des Einzugs des Inliners. Bei diesem Verfahren wird ein neuer Rohrstrang oder ein Schlauch in das alte Rohr eingezogen, welcher an dem alten Rohr anzuliegen vermag.

In anderen herkömmlichen Verfahren zum Abdichten einer undichten Muffenverbindung von Rohrleitungen, die beispielsweise unterirdisch verlegt sind, wird als Abdichtmittel ein Kunststoff zur Abdichtung auf den Stoß durch Rotieren eines Zerstäubungskopfes um die Rohrleitungsachse aufgebracht und der Kunststoff zudem im Bereich beiderseits des Stoßes durch eine steuerbare Translationsbewegung des Zerstäubungskopfes gegenüber dem Gerät vorgenommen. Durch die beiderseitigen Aufbringungen des Kunststoffs durch die steuerbare Translationsbewegung des Zerstäubungskopfes erstreckt sich die Kunststoffschicht über die umlaufende Spaltbreite, so dass die Haftfläche der Kunststoffschicht vergrößert wird und der Querschnitt der Rohrleitungen sich nachteiligenswert verringert. Des Weiteren ist das Verfahren aufgrund des Einsatzes von Zerstäubungsköpfen in axialer und translationaler Richtung kompliziert und bedarf der steten Überprüfung während der Sanierung.

Aufgabe der Erfindung soll es sein, ein Verfahren und eine Rohrverbindung bereitzustellen, welche die o.g. Nachteile des Stands der Technik nicht aufweisen.

Mit dem bereitzustellenden Verfahren soll der eingesetzte Dichtungsschlauch vollflächig mit seiner Unterseite, z.B. auf dem Druckübertragungsring, aufliegen.

Weiterhin sollen die Dicke des eingesetzten Dichtungsschlauchs der Rohrverbindung in Umfangsrichtung konstant verbleiben und der Dichtungsschlauch das im Stand der Technik zu beobachtende seitliche Austreten desselben infolge Überdrucks in demselben nicht zeigen.

Des Weiteren soll der Dichtungsschlauch im Gegensatz zu einer herkömmlichen Rohrverbindung nicht nur auf Spalten und Risse im Bereich der Stoßfuge oder des Stoßbereichs aufliegen, sondern vielmehr in diese eindringen, denn nur dessen Eindringen in diese gewährleistet die dauerhafte und zuverlässige Abdichtung im Bereich der Stoßfuge oder des Stoßbereichs.

Auch soll der Dichtungsschlauch der bereitzustellenden Rohrverbindung den Nachteil vermeiden, dass der Dichtungsschlauch aufgrund des Fehlens eines Widerlagers, gegen welches er unter Einsatz einer Manschette und eines auf diese einwirkenden Spannring anzusetzen wäre, nach seinem Einsetzen in die Fuge zwischen der Muffe einerseits und dem Spitzende andererseits und seiner Beaufschlagung mit hohem Innendruck durch das Einführen eines Fluids in denselben in den Bereich der Fuge hin entweicht oder in diese hin sich zusehends mehr aufbläht, in welchem das Widerlager fehlt.

Hinzukommend soll die stete und kostenträchtige Kontrolle des Überdrucks im Schlauch zur Aufrechterhaltung der Abdichtung der Rohrverbindung vermieden werden.

Darüber hinaus sollen das Verfahren und die Rohrverbindung die stete Kontrolle des hohen Innendrucks des Schlauchs zwecks Aufrechterhaltung desselben und die stete Überprüfung des Auftretens von Materialermüdungen des Schlauchs vermeiden.

Auch sollen das Verfahren und die Rohrverbindung den Schlauch in Umfangsrichtung wenig beanspruchen, so dass im Schlauch keine Rissbildung auftritt und nicht zur Undichtigkeit neigt.

Ebenfalls sollen das Verfahren und die Rohrverbindung infolge Erschütterungen und Versatz im Erdreich die hierdurch auftretenden Relativverschiebungen der Rohrenden und unterschiedlichen Beabstandungen von Bereichen der Rohrenden voneinander dauerhaft abdichten.

Ebenso sollen das Verfahren und die Rohrverbindung sich zur Abdichtung von verbauten gekrümmten Rohrverbindungen eignen, ohne dass eine Anpassung vor Ort erforderlich ist.

Des Weiteren soll die Rohrverbindung keine Gegenkräfte von Bauteilen derselben zeigen, die zu der zu Undichtigkeit führenden Kraftermüdung hervorrufen.

Hinzutretend sollen das Verfahren und die Rohrverbindung stets die abzudichtende Spalte ohne Nachlassen der Spannkraft der Bauteile abdichten.

Gleichfalls sollen das Verfahren und die Rohrverbindung in Erdreich einsetzbar sein ohne Rücksicht auf Auftreten von Erschütterungen, Erdreichversatz und -beben, um deren ubiquitäre Verwendung auch in Gebieten mit tiefgreifenden Erdschichtverschiebungen und auftretenden Bergbauschäden zu fördern.

Auch soll das Verfahren bereitstellen, dass dauerhaft die Abdichtung der Rohrverbindung, z.B. Muffenverbindung, trotz Rohrversatz im Erdreich bereithält.

Zudem soll das Verfahren das Versickern der in den Rohrleitungen bewegten Abwässer als Exfiltration vermeiden und gerade in Zeiten des hohen Umweltbewusstseins und der hierdurch geforderten Vermeidung der Umweltbelastung Rechnung tragen.

Gleichfalls soll das Verfahren das Einsickern von Grundwasser in das Innere der Rohre über die Rohrverbindungen als Infiltration verhindern, um sowohl die unerwünschte Volumenzunahme der Abwässer als auch die Kosten für die Klärung hoher Abwasservolumina zu vermeiden.

Überdies soll das Verfahren die Rohrverbindung der einander angrenzenden oder benachbarten, wie voneinander beabstandeten, Rohrenden derart abdichten, dass keine Verringerung des Innendurchmessers in dem Bereich der abgedichteten Rohrverbindung auftritt, die das Anström- und Abströmverhalten der in den Rohren geführten flüssigen Medien verändern könnten.

So soll das Verfahren die Rohrverbindung der einander angrenzenden oder voneinander beabstandeten Rohrenden dergestalt abdichten, dass keine Strömungserhöhung der im Bereich der Rohrverbindung führenden flüssigen Medien durch die Verringerung des Innendurchmessers bzw. der lichten Weite der abgedichteten Rohrverbindung beobachtet wird.

Des Weiteren soll das Verfahren eine gekrümmte Rohrverbindung der einander angrenzenden oder voneinander beabstandeten Rohrenden dauerhaft abdichten.

Hinzukommend soll das Verfahren die Rohrverbindung der einander angrenzenden oder voneinander beabstandeten Rohrenden abdichten, unabhängig davon, ob zwischen den Rohrenden z.B. von Vortriebsrohren ein Druckübertragungsring noch vorhanden ist oder ob zwischen einer Muffe und einem in der Muffe angeordnetem Spitzende ein hölzerner Abstandsring oder ein Teer getränkter Hanfstrick angeordnet oder bereits infolge Verrottung fehlt.

So soll gleichfalls das Verfahren geradlinig verlaufende oder gekrümmte Rohrverbindung der einander angrenzenden oder voneinander beabstandeten Rohrenden abdichten, unabhängig davon, ob die Rohrenden Vortriebsrohren zuzuordnen sind oder ob das eine Rohrende dem einen Rohr mit glockenförmig ausgebildeter Muffe und das andere Rohrende dem in der Muffe angeordneten Spitzende des anderen Rohrs zugehörig sind.

Hinzutretend soll das Verfahren eine Rohrverbindung der einander angrenzenden oder voneinander beabstandeten Rohrenden dergestalt abdichten, dass mindestens ein Prüf- oder Überwachungsraum oder sogar zwei oder drei derselben bereitgestellt werden, unabhängig davon, ob die Rohrenden den Vortriebsrohren des Untertagebaus zuzuordnen sind oder ob das eine Rohrende dem einen Rohr mit glockenförmig ausgebildeter Muffe und das andere Rohrende dem in der Muffe angeordneten Spitzende des anderen Rohrs zugehörig sind.

Ebenso soll das Verfahren eine Rohrverbindung der einander angrenzenden oder voneinander benachbarten Rohrenden dergestalt abdichten, dass mindestens ein Prüf- oder Überwachungsraum oder sogar zwei oder drei derselben bereitgestellt werden, welche zusätzlich abgedichtet werden können.

Ebenso soll es Aufgabe der Erfindung sein, eine Abdichtung bereitzuhalten, die nicht nur keiner dauernden Überwachung bedarf, sondern auch aufgrund ihrer hinreichenden Widerstandsfähigkeit gegenüber den zum Teil sehr aggressiven Abwässern den hinreichenden Schutz des das Rohrleitungssystem umgebenden Erdreichs ohne kostenträchtige Überwachung bereithält.

Ebenfalls soll es Aufgabe der Erfindung sein, ein Verfahren bereitzuhalten, welches eines geringen Arbeitsaufwands bedarf, so dass der Arbeitsaufwand kostengünstig ist, um das Verfahren in begehbaren Rohrleitungssystemen in geschlossener Sanierungsweise anwendbar zu halten.

Hinzutretend soll das bereitzustellende Verfahren keine hohen Anforderungen an die Geschicklichkeit des Benutzers stellen.

Weiterhin soll es Aufgabe der Erfindung sein, die Muffenverbindung begehbarer Rohrleitungen derart abzudichten, dass dieses Verfahren sich gleichfalls eignet für jedwede Muffenverbindung aufweisenden Rohrverbindungen.

Die Aufgaben werden gelöst durch den Hauptanspruch und dem Nebenanspruch. Die Unteransprüche betreffen bevorzugte Ausgestaltungen und Weiterentwicklungen der Erfindung.

Die Erfindung betrifft ein Verfahren zum dauerhaften Abdichten einer Rohrverbindung zwischen zwei flüssige Medien führenden Rohren, durch
Einsetzen eines Dichtungsschlauches in eine in einem Stoßbereich von Enden der Rohre angeordnete Aufnahmenut,
Ansetzen eines ringförmig ausgestalteten, in Umfangsrichtung quer geschlitzten Stahlbandes mit zwei Enden als Widerlager gegen den Dichtungsschlauch, welches gekennzeichnet ist durch
Auseinanderspreizen der Enden des Stahlbandes voneinander zwecks Beaufschlagung des Dichtungsschlauches mit einer Kraft
sowie
Verbinden der Enden des kraftbeaufschlagten Stahlbandes durch Ansetzen der Enden des Stahlbandes aneinander Stoß auf Stoß oder Einsetzen eines Formstücks zwischen die Enden desselben Stoß auf Stoß.

Die Erfindung bezieht sich auch auf eine dauerhafte hoch belastbare Rohrverbindung bestehend aus zwei Abwasserrohrenden mit einer in einem Druckübertragungsring als Druckübertragungseinrichtung ausgefrästen Aufnahmenut und einem zwischen einem Spitzende und einer Muffe angeordneten Druckübertragungsring und einem in die Aufnahmenut eingesetzten Dichtungsschlauch, welche gekennzeichnet ist durch
ein kraftbeaufschlagt gegen den Dichtungsschlauch angesetztes ringförmiges in Umlaufrichtung quer geschlitztes Stahlband,
dessen Enden miteinander verbunden sind, wobei die Enden des Stahlbandes Stoß auf Stoß oder ein Formstück zwischen den Enden desselben Stoß auf Stoß angeordnet sind,
ein elastisches Dichtungsmaterial, welches in einem von dem Spitzende, der Muffe oder einem Mantel und von einem von der Stirnseite abgewandten auf dem Spitzende angeordneten Dichtungsring ausgebildeten Zwischenraum sich befindet.

Auch ist ein leicht durchführbares, kostengünstiges Verfahren zum dauerhaften Abdichten einer Rohrverbindung zwischen, vorzugsweise zwei flüssige Medien führenden, Rohre, wie begehbaren Abwasserrohren, von Vorteil, das gekennzeichnet ist durch Einsetzen eines Dichtungsschlauches in eine im Stoßbereich der Enden der Rohre angeordnete Aufnahmenut, Ansetzen eines ringförmig ausgestalteten Stahlbandes als Widerlager gegen den Dichtungsschlauch und Auseinanderspreizen der Enden des Stahlbandes voneinander zwecks Beaufschlagung des Dichtungsschlauches mit einer Kraft sowie formschlüssiges Verbinden der Enden, vorzugsweise Ansetzen der Enden des Stahlbandes aneinander Stoß auf Stoß oder Einsetzen eines Formstücks zwischen die Enden desselben Stoß auf Stoß, vorzugsweise Einsetzen des Dichtungsschlauches in die Aufnahmenut, wobei zumindest eine ihrer Seiten mit einer Mörtelmasse beschichtet ist.

Das erfindungsgemäße Verfahren kann auch die folgenden ersten Verfahrensschritte umfassen, z.B. je nach Vorlage oder Zustand der herkömmlichen abzudichtenden Rohrverbindung:
Abtragen zumindest eines Teils eines zwischen dem einem Ende des einen Rohres und dem einen Enden des anderen Rohres der Rohrverbindung angeordneten, vorzugsweise hölzernen, Druckübertragungsrings zur Bereitstellung einer Aufnahmenut zum Einsetzen eines Dichtungsschlauchs in dieselbe,
Auftragen einer, vorzugsweise hochviskösen, Mörtelmasse auf den Druckübertragungsring zur Bereitstellung einer glatten Oberfläche und
Einsetzen des Dichtungsschlauches in die Aufnahmenut,
   oder
Abtragen zumindest eines Teils eines zwischen dem einem Ende des einen Rohres und dem einen Enden des anderen Rohres der Rohrverbindung angeordneten, vorzugsweise hölzernen, Druckübertragungsrings zur Bereitstellung einer Aufnahmenut zum Einsetzen eines Dichtungsschlauchs in dieselbe und
Einsetzen des Dichtungsschlauches in die Aufnahmenut,
   oder
Auftragen einer, vorzugsweise hochviskösen, Mörtelmasse auf den Druckübertragungsring zur Bereitstellung einer glatten Oberfläche in der bereits vorhandenen Aufnahmenut einer herkömmlichen Rohrverbindung ohne vorheriges Abtragen und
Einsetzen des Dichtungsschlauches in die Aufnahmenut.

Das erfindungsgemäße Verfahren kann auch die folgenden ersten Verfahrensschritte umfassen, z.B. je nach Vorlage oder Zustand der herkömmlichen abzudichtenden Rohrverbindung:
Abtragen zumindest eines Teils eines zwischen dem einem Ende des einen Rohres und dem einen Enden des anderen Rohres der Rohrverbindung angeordneten, vorzugsweise hölzernen, Druckübertragungsrings und eines Teils von einem Ende eines Rohres oder eines teils von beiden Enden beider Rohre zur Bereitstellung einer Aufnahmenut zum Einsetzen eines Dichtungsschlauchs in dieselbe,
Auftragen einer, vorzugsweise hochviskösen, Mörtelmasse auf den Druckübertragungsring und/oder auf zumindest eine der beiden Nutflanken zur Bereitstellung einer glatten Oberfläche und
Einsetzen des Dichtungsschlauches in die Aufnahmenut,
   oder
Abtragen eines Teils von beiden Enden beider Rohre zur Bereitstellung einer Aufnahmenut zum Einsetzen eines Dichtungsschlauchs in dieselbe,
Auftragen eines, vorzugsweise hochviskösen, Mörtels auf zumindest eine Nutflanke und /oder den Nutgrund zur Bereitstellung einer glatten Oberfläche
   und
Einsetzen des Dichtungsschlauches in die Aufnahmenut.

Das erfindungsgemäße Verfahren ist auch gerichtet auf die Abdichtung herkömmlicher Verbindungen von, z.B. einer Muffe und Spitzende oder von Vortriebsrohren, die infolge Erschütterungen, Senkungen, Korrosion, Dichtmaterialverrottung, usw. undicht wurden oder sind.

Unter Rohre können im Sinne der Erfindung auch begehbare und nicht begehbare Rohre verstanden werden; so kann man unter Rohre im Sinne der Erfindung auch begehbare oder nicht begehbare Vortriebsrohre oder begehbare oder nicht begehbare Abwasserrohre verstehen.

Unter Rohrverbindung kann im Sinne der Erfindung auch verstanden werden eine Verbindung von zwei Rohrenden oder zwei Rohren, deren Enden, zum Beispiel von zwei Vortriebsrohren, Stoß auf Stoß aneinander anliegen, wobei beide Enden mit einem gemeinsamen rohrförmigen Mantel, auch Kupplung, Überschiebkupplung, Führungsring, lose Muffe, Stahlmanschette oder Führungsmanschette genannt, außenseitig begrenzt bzw. ummantelt sein können.

Unter Rohrverbindung kann im Sinne der Erfindung auch verstanden werden eine Muffenverbindung zur Verbindung von zwei Rohrenden, wobei das eine Ende des einen Rohrs das eine Ende des anderen Rohr aufnimmt und das eine Ende des einen Rohrs einen mit dem sonstigen Teil des einen Rohrs einen konstanten Innendurchmesser aufweist oder das eine Ende des einen Rohrs hauben- oder glockenförmig zur Muffe aufgespreizt oder aufgeweitet ausgebildet sein kann. Unter Rohrverbindung zwischen Rohren wird im Sinne der Erfindung auch die Rohrverbindung von Rohren oder von deren Enden verstanden.

Als Muffe oder Muffenverbindung kann im Sinne der Erfindung auch der Bereich beider Rohre verstanden werden, der das eine Ende des einen Rohres und das andere Ende des anderen Rohres umfasst, wobei das eine Ende des einen Rohres das andere Ende des anderen Rohres aufnimmt; dieser Bereich kann die in Umfangsrichtung verlaufende rohrförmige Kupplung zusätzlich umfassen. Im Sinne der Erfindung wird unter Umfangsrichtung verlaufend auch der bogengemäße, wie kreisbogenförmige oder teilkreisbogenförmige, Umlauf um eine Mitte-Längsachse, z.B. die der Rohre, der Enden derselben, des Stahlbandes, verstanden.

Das hauben- oder glockenförmig aufgespreizte Ende des einen Rohrs kann als Steckmuffe mit einer Anschrägung oder einem fasengemäßen Einzug ohne / oder mit einer Anschrägung im Muffengrund ausgestaltet sein.

Die Erfindung betrifft auch ein leicht durchführbares, kostengünstiges Verfahren zum dauerhaften Abdichten einer Rohrverbindung, z.B. einer Muffenverbindung, zwischen zwei Rohren, die flüssige Medien führen und /oder sonstige Leitungen, wie Kabel, z.B. Telefonkabel, elektrischen Strom leitende Kabel, sonstige Versorgungsleitungen, enthalten können.

Eine Ausgestaltung des erfindungsgemäßen leicht durchführbaren, kostengünstigen Verfahrens zum dauerhaften Abdichten einer Muffenverbindung als Rohrverbindung von Rohren, insbesondere begehbaren Abwasserrohren, ist durch die folgenden Verfahrensschritte gekennzeichnet:
a. Abtragen zumindest eines Teils eines zwischen einer Muffe der Muffenverbindung als das eine Ende des einen Rohres und einem Spitzende als das eine Ende des anderen Rohres angeordneten, vorzugsweise hölzernen, Druckübertragungsrings zur Bereitstellung einer Aufnahmenut zum Einsetzen eines Dichtungsschlauchs in dieselbe
   und /oder
   Auftragen eines, vorzugsweise hochviskösen, Mörtels auf den Druckübertragungsring zur Bereitstellung einer glatten Oberfläche,
b. Einsetzen des Dichtungsschlauches in die Aufnahmenut,
c. Ansetzen eines ringförmig ausgestalteten Stahlbandes, als Widerlager wirkend, gegen den Dichtungsschlauch,
d. Auseinanderspreizen der Enden des Stahlbandes voneinander zwecks Beaufschlagung des Dichtungsschlauches mit einer Kraft,
e. formschlüssiges Verbinden der Enden des Stahlbandes, vorzugsweise Ansetzen der Enden des Stahlbandes aneinander Stoß auf Stoß oder Einsetzen eines Formstücks zwischen die Enden des Stahlbandes Stoß auf Stoß zur dauerhaften Kraftbeaufschlagung des Dichtungsschlauches.

Im Sinne der Erfindung wird auch unter Stoßfuge der Bereich oder Abstandsbereich zwischen den Stirnseiten der benachbarten Rohre, wie Abwasserrohre, verstanden; die Stirnseiten können einander angrenzen, wie Stoß an Stoß anliegen, oder voneinander beabstandet, wie auseinanderklaffend, sein. Die Stoßfuge kann im Sinne der Erfindung auch Stoßbereich genannt werden .

In einer besonderen Ausgestaltung des erfindungsgemäßen leicht durchführbaren, kostengünstigen Verfahrens mit einander angrenzenden Stirnseiten der Enden der Rohre ist der Abstandsbereich derart gering, dass das Ausfräsen der Aufnahmenut aus den Stirnseiten der Rohre von Vorteil ist.

Für die Anwendung des erfindungsgemäßen Verfahrens zur Abdichtung der undichten Rohrverbindung von zwei Vortriebsrohren kann zum Beispiel die Ausfräsung zur Bereitstellung der Aufnahmenut
aus dem dem Inneren der Rohre zugewandten Teil des Druckübertragungsrings und aus dem dem Inneren der Rohre zugewandten Teil der beiden dem Druckübertragungsring benachbarten Stirnseiten oder Enden der Rohre, also beidseitig, oder
aus dem dem Inneren der Rohre zugewandten Teil des Druckübertragungsrings und aus dem dem Inneren der Rohre zugewandten Teil einer dem Druckübertragungsring benachbarten Stirnseite oder Ende eines Rohres, also einseitig, vorteilhafterweise durchgeführt werden, unabhängig vom Abstand der Stirnseiten voneinander.

So kann die Ausfräsung zur Bereitstellung der Aufnahmenut nur aus den dem Inneren der Rohre zugewandten Teilen benachbarter Stirnseiten oder Enden der Rohre, also beidseitig, oder nur aus einer Stirnseite oder Ende eines Rohres, also einseitig, durchgeführt werden, unabhängig davon ob die Stirnseiten einander angrenzen oder weit oder nah voneinander beabstandet sind.

Die Aufnahmenut ist bevorzugterweise umlaufend ausgefräst; im Sinne der Erfindung wird unter umlaufender Aufnahmenut auch verstanden, dass die Aufnahmenut um die Mitte-Längsachse der Rohre, von deren Enden oder Rohrverbindung verläuft. Vorteilhafterweise können eine oder beide die Aufnahmenut begrenzenden Seiten mit einer Mörtelmasse beschichtet werden, bevor der Dichtungsschlauch in die Aufnahmenut eingesetzt wird.

In den einseitig oder in die beidseitig ausgefrästen Abschnitten kann eine Mörtelmasse zur Bereitstellung der Mörtelschicht auf Nutflanken und / den Nutgrund der Aufnahmenut aufgetragen, wie aufgeputzt, werden.

Die erfindungsgemäße Rohrverbindung, die die beiden Enden der zwei Vortriebsrohre verbindet, kann außenseitig von dem rohrförmigen Mantel, auch Kupplung, Überschiebkupplung, Führungsring, Stahlmanschette oder Führungsmanschette genannt, welcher einen metallenen und/oder kunststoffartigen Werkstoff, mit oder ohne Glasfaserverstärkung, außenseitig begrenzt sein.

Die erfindungsgemäße Rohrverbindung zwischen zwei Abwasserrohrenden kann aufweisen, eine im Bereich einer Innenseite zwischen dem einen Ende des anderen Abwasserrohres und dem einen Ende des einen Abwasserrohr ausgefräste Aufnahmenut, einen in die Aufnahmenut eingesetzten Dichtungsschlauch, ein kraftbeaufschlagt gegen den Dichtungsschlauch angesetztes ringförmiges in Umlaufrichtung quer geschlitztes Stahlband, dessen Enden miteinander verbunden sind, vorzugsweise die Enden des Stahlbandes Stoß auf Stoß oder ein Formstück zwischen den Enden desselben Stoß auf Stoß angeordnet sind. Auch ist es möglich, dass die erfindungsgemäße Rohrverbindung zwischen zwei Abwasserrohrenden aufweist, eine aus dem, vorzugsweise hölzernen, Druckübertragungsring als Druckübertragungseinrichtung ausgefräste Aufnahmenut, welche zwischen dem Spitzende und der Muffe oder zwischen den Stirnseiten der benachbarten Enden von Rohren angeordnet ist, einen in die Aufnahmenut eingesetzten Dichtungsschlauch, ein kraftbeaufschlagt gegen den Dichtungsschlauch angesetztes ringförmiges in Umlaufrichtung quer geschlitztes Stahlband, dessen Enden aneinander anstoßen oder ein Formstück zwischen diesen Stoß auf Stoß angeordnet sind.

Eine weitere Ausgestaltung der erfindungsgemäßen dauerhaften hoch belastbaren Rohrverbindung zwischen zwei Abwasserrohrenden ist gekennzeichnet durch
1. eine durch eine Abfräsung zumindest eines Teils des Druckübertragungsrings bereitgestellte Aufnahmenut, welcher Druckübertragungsring zwischen einer Muffe als das eine Ende des einen Rohres und einem Spitzende als das eine Ende des anderen Rohres angeordnet ist,
2. einen in die Aufnahmenut eingesetzten Dichtungsschlauch,
3. ein kraftbeaufschlagt gegen den Dichtungsschlauch angesetztes ringförmiges in Umlaufrichtung quer geschlitztes Stahlband,
4. dessen Enden miteinander verbunden, vorzugsweise die Enden des Stahlbandes Stoß auf Stoß aneinander oder ein Formstück zwischen den Enden desselben Stoß auf Stoß angeordnet, sind.

Das erfindungsgemäße Verfahren kann in einem ersten Schritt das zumindest teilweise Ab- und Ausfräsen eines Druckübertragungsrings, der in Umlaufrichtung um die Mitte-Längsachsen von Rohren oder Rohrverbindungen verlaufen kann; der, vorzugsweise als fortlaufend oder unterbrochen sich erstreckende, Druckübertragungsring, auch Druckübertragungseinrichtung genannt, kann zwischen einer Stirnseite des Spitzendes des anderen Rohres und dem Muffenspiegel, auch Muffengrund genannt, des als Muffe ausgebildeten Ende des einen Rohres angeordnet sein. Der Druckübertragungsring ist häufig aus einem holzartigen Material, Teer getränkten Hanfstrick oder geteertem Hanf hergestellt und kann zusammengedrückt in der Fugenspalte oder Stoßfuge zwischen den Stirnseiten der Enden der Rohre sich befinden.

Häufig haben herkömmliche Rohrverbindungen, welche ein Rohr mit einer glockenförmigen Muffe aufweisen, in welcher das Spitzende des anderen Rohres eingefügt ist, keinen Druckübertragungsring zwischen den beiden aneinander angrenzenden Rohrenden, wie zwischen der Stirnseite des Spitzendes des anderen Rohres und dem Muffenspiegel des als Muffe ausgebildeten Endes des einen Rohres. Für die Anwendung des erfindungsgemäßen Verfahrens zur Abdichtung der undichten Verbindung zwischen dem einen Rohr mit glockenförmiger ausgebildeter Muffe und einem in der Muffe, vorzugsweise bis zum Muffenspiegel, eingeschobenen Spitzende des anderen Rohrs kann die Ausfräsung zur Bereitstellung der Aufnahmenut aus dem dem Inneren der Rohre zugewandten Teil aus einer Stirnseite oder Spitzende eines Rohres, also einseitig, durchgeführt werden, oder aus dem dem Inneren der Rohre zugewandten Teil aus einer Stirnseite oder Spitzende des anderen Rohres und aus dem dem Inneren der Rohre zugewandten Teil der Muffe des einen Rohrs im Bereich deren Muffenspiegels, also beidseitig, durchgeführt werden, unabhängig davon, ob die Stirnseite an den Muffenspiegel angrenzt oder von diesem beabstandet ist.

Mit Hilfe des erfindungsgemäßen Verfahrens wird der Dichtungsschlauch von außen mit einer durch das Stahlband erzeugten nach außen wirkenden Kraft radial außen beaufschlagt, so dass im Gegensatz zu einem herkömmlichen Verfahren, bei welchem der Schlauch nach seinem Einbringen in den Spalt zwischen zwei Rohrenden mit einem Fluid aufgeblasen wird,
der Dichtungsschlauch vollflächig mit seiner Unterseite, z.B. an den Druckübertragungsring, anliegt,
die Schlauchdicke nicht abnimmt, sondern im Umfangsrichtung konstant verbleibt,
das Stahlband als Widerlager für den Dichtungsschlauch dessen vollflächiges Anliegen unterstützt und die hierdurch bedingte Abdichtung in Umfangsrichtung unterstützt,
das seitliche Austreten des Dichtungsschlauchs infolge Überdrucks und des Aufblasens des herkömmlichen Schlauchs, wie es bei dem vorgenannten Verfahren zu beobachten ist, wirkungsvoll vermieden wird,
der Dichtungsschlauch nur einseitig mit Hilfe des Stahlbandes mit der radial von der Manschette erzeugten Kraft beaufschlagt wird, so dass sowohl das Material des Dichtungsschlauchs geschont wird, als auch sich durch eine hohe Lebensdauer auszeichnet und dauerhaft und zuverlässig den Spalt abzudichten vermag,
der Dichtungsschlauch keiner steten und kostenträchtigen Kontrolle des Überdrucks - wie im Schlauch der herkömmlichen Rohrverbindung- zur Aufrechterhaltung der Abdichtung bedarf
sowie
der Dichtungsschlauch im Gegensatz zu der herkömmlichen Rohrverbindung aufgrund der auf den Dichtungsschlauch radial von innen nach außen von dem Stahlband erzeugten Kraft in kleinste Spalten und Risse im Bereich der Stoßfuge oder des Stoßbereichs, z.B. zwischen dem Druckübertragungsring und der Aufnahmenut, eindringt, und nicht nur -wie bei der herkömmlichen Rohrverbindung, wenn überhaupt,- auf diesen oberflächlich aufliegt.

Wegen der in dem, vorzugsweise als Vollkunststoffschlauch oder -ring ausgebildeten, Dichtungsschlauch sowohl radial verlaufenden als auch schräg in den beiden dem Stahlband benachbarten Seitenbereiche des Dichtungsschlauchs verlaufenden vom Stahlband erzeugten Kraftvektoren eignen sich das erfindungsgemäße Verfahren und die erfindungsgemäße Rohrverbindung auch zur zuverlässigen und dauerhaften Abdichtung von gekrümmten Rohrverbindungen ohne Erfordernis der nachträglichen Kontrolle derselben.

Ein weiterer Vorteil des erfindungsgemäßen Verfahrens und der erfindungsgemäßen Rohrverbindung liegt auch in dem technischen Erfolg begründet, dass beispielsweise bei Verwendung des Dichtungsschlauchs, z.B. als sog. Vollgummischlauch oder auch Vollkunststoffschlauch, die von dem Stahlband erzeugte Kraft nicht nur radial auf den Dichtungsschlauch gerichtet ist, sondern auch in denjenigen Bereichen des Schlauchs, gegen welche das Stahlband nicht aufliegt, auch als Seitenbereiche des Dichtungsschlauchs bezeichnet, abgeleitet wird, so dass ebenfalls die Seitenbereiche des Dichtungsschlauchs vollflächig nicht nur gegen Nutflanken abdichtend aufzuliegen vermögen, sondern hinzutretend bevorzugterweise in die Spalten und Risse der Nutflanken abdichtend und kraftbeaufschlagt eindringen.

Im Sinne der Erfindung wird unter Dichtungsschlauch auch ein Schlauch verstanden, der ohne oder mit mindestens einem innerem, fortlaufend oder unterbrochen sich erstreckendem Hohlraum und elastischem kunststoffartigem Material, z.B. als Dichtungsring, ausgebildet ist. So kann der Dichtungsschlauch ohne Hohlraum als Vollkunststoffschlauch oder -ring ausgestaltet sein.

Hinzutretend zeigt sich, dass aufgrund der in den im als Vollkunststoffschlauch ausbildbaren Dichtungsschlauch sowohl radial verlaufenden als auch schräg in den beiden dem Stahlband benachbarten Seitenbereichen des Dichtungsschlauchs verlaufenden vom Stahlband erzeugten Kraftvektoren das erfindungsgemäße Verfahren und die erfindungsgemäße Rohrverbindung solche Rohrverbindungen zuverlässig und dauerhaft abdichtet, wenn erst nach dem Verbau der erfindungsgemäßen Rohrverbindung diese infolge der durch Erdreichversatz, wie Bergbauschäden, hervorgerufenen Relativbewegungen sich gekrümmt zueinander verschieben ohne Erfordernis der nachträglichen Kontrolle derselben aufgrund der Beibehaltung der Abdichtung.

Hinzukommend ist zwar das Stahlband elastisch aufspreizbar zum Ansetzen gegen den Dichtungsschlauch, gleichwohl ist das Stahlband vorteilhafterweise infolge seiner aneinanderstoßenden Enden oder des Einfügens des Formstück zwischen seine Enden soweit starr, dass das Stahlband auch in Gegenwart von durch das Erdreich erzeugten auf die Rohrverbindung einwirkenden Kräfte eine Gegenkraft bewirkt und das dichtende Anliegen des Dichtungsschlauchs gegen Nutflanken und Nutgrund und Eindringen in Risse und Spalten derselben weiterhin aufrechterhält, im Gegensatz zu herkömmlichen Rohrverbindungen, bei denen das Nachgeben der Manschette und/oder das des gegen die Manschette aufliegenden Spannrings zu beobachten ist.

Auch erweist sich das erfindungsgemäße Verfahren und die erfindungsgemäße Rohrverbindung von Vorteil, weil durch die hohe Rückstellkraft des, vorzugsweise als Vollkunststoffschlauch ausgestalteten, Dichtungsschlauchs dieser sich jederzeit auch an erst nach dem Verbau der erfindungsgemäßen Rohrverbindung sich einstellenden durch Relativbewegungen bedingten Rohrendenversatz anpassen kann und Bewegungen der Rohrenden mitmacht unter Beibehaltung seines Anliegens an Flächen von Nutgrund undflanken und seines Eindringens in deren Spalte und Risse.

Gleichfalls liegt ein weiterer Vorteil des erfindungsgemäßen Verfahrens und der erfindungsgemäßen Rohrverbindung in seinem Verbau in Erdreich ohne Rücksicht auf Auftreten von Erschütterungen, Erdreichversatz und -beben, so dass deren ubiquitäre Verwendung auch in Gebieten mit tiefgreifenden Erdschichtverschiebungen und /oder auftretenden Bergbauschäden sich geradewegs aufdrängt.

Auch zeigt es sich vorteilhafterweise durch die Verwendung des Dichtungsschlauchs, insbesondere als Vollkunststoffschlauch oder -ring, dass das Eindringen desselben in Spalte und Risse und zusätzlich das Aufliegen auf dem Spalt durch denselben durch die hohe Rückstellkraft des Vollkunststoffschlauchs unterstützt wird.

Bei Anwendung des herkömmlichen Verfahrens mit dem herkömmlichen mit dem Fluid aufblähbaren und sonach aktivierbaren Schlauch, auch Fluidschlauch genannt, findet die abdichtende Krafteinleitung über den eigentlichen Füllvorgang des herkömmlichen Schlauches mit Fluid durch Überdruck statt und nicht wie bei dem erfindungsgemäßen Verfahren durch eine mechanische Krafteinleitung. Zudem zeigt sich der Vorteil, dass das erfindungsgemäße Verfahren die Möglichkeit der Prüfung der Abdichtung über die Prüfnadel anbietet, da der Dichtungsschlauch vorzugsweise aus einem vollen Elastomerprofil besteht. Dieser kann an beliebiger Stelle durchstoßen werden. Der herkömmliche mit Fluid gefüllte Schlauch würde infolge Durchstoßens des Schlauchs mit der Prüfnadel so weit hierdurch beschädigt werden, dass das für die Aufblähung des Schlauchs und Beibehaltung seiner Aufblähung druckaufbauende und druckerhaltende Fluid entweichen und Undichtigkeiten sich einstellen.

Eine Prüfungsebene und somit Überprüfung des Erfolges der Sanierung, wie sie sich durch die Anwendung des erfindungsgemäßen Verfahrens einstellt, ist bei dem herkömmlichen Schlauch nicht vorgesehen.

Auch muss bei dem herkömmlichen Verfahren jeder Schlauch im Vorfeld einzeln hergestellt werden, das heißt, es ist im Vorfeld ein Aufmaß der Rohrfugen auf Durchmesser und Fugenspaltbreite erforderlich. Bei dem erfindungsgemäßen Verfahren kann just in Time und vor Ort gehandelt werden. Wenn man also weiß, dass hierfür eine umfangreiche Vorbereitung, durch z.B. einer sehr kostenintensiven provisorischen Abwasserüberleitung erforderlich ist, oder eine Verkehrssperrung, nur um dieses Fugenaufmaß zu machen, dann wieder alles abzubauen, um anschließend erstmal zu produzieren, ist das herkömmliche Verfahren weder kostengünstig, noch leicht vor Ort einsetzbar. Das erfindungsgemäße Verfahren ermöglicht durch die Verwendung des Dichtungsschlauchs und des Stahlbandes einen sofortigen Verbau vor Ort ohne vorherige Vornahme des Aufmaßes. Daher ist das herkömmliche Verfahren mit dem herkömmlichen mit dem Fluid aufblähbaren und sonach aktivierbaren Schlauch in der Praxis nicht geeignet.

Das erfindungsgemäße Verfahren beruht auch auf zwei Funktionsvarianten bezüglich der einwirkenden Kräfte. Über das Widerlager aus der Manschette, z.B. als Stahlband, wird durch den Aufspannvorgang, durch eine Krafteinleitung mit einer Spreizschere, eine Vorspannung erzeugt. Hierdurch werden der Dichtungsschlauch gegen die beiden anliegenden Rohrspiegel bzw. in der Aufnahmenut komprimiert und somit eine höhere Abdichtung erzielt, sog. Krafteinleitung von innen (künstlich). Hierfür eignet sich vorteilhafterweise ein unmittelbar hinter dem Dichtungsschlauch angeordnetes Widerlager, z.B. aus einem vorhandenen Druckübertragungsring oder einem nachträglich angelegten Widerlager in Form einer Vorverdämmung des Fugenspaltes zwischen den beiden Rohrspiegeln, z.B. aus einer mineralischen Mörtelmasse, bzw. in der Aufnahmenut.

In einer weiteren Ausgestaltung des erfindungsgemäßen Verfahrens wird die Manschette, z.B. als Stahlbandwiderlager, nur mit geringer Vorspannung eingebaut, sog. Krafteinleitung von außen (natürlich), so dass bei einer vorhandenen Undichtigkeit durch infiltrierendes Wasser von außen eine automatische Krafteinleitung von hinten über den Dichtungsschlauch auf das Widerlager, z.B. das Stahlband, stattfinden kann. Das Widerlager aus dem Stahlband ist durch seine gewählte Form selbstständig lastabtragend und somit statisch stabil.

In einer anderen herkömmlichen Dichtung befindet sich zwischen zwei aneinander schließenden Betonrohren ein hölzerner Dichtdruckübertragungsring, der lediglich beide Rohrenden auf Abstand hält, wobei zwei von ihm beabstandete Dichtungsringe auf beiden spitz zulaufenden Rohrenden aufgezogen sind zur Überbrückung des Spaltes zwischen der Muffe einerseits und den beiden Rohrenden andererseits.

In einer Ausfiihrungsform des erfindungsgemäßen Verfahrens wird im Gegensatz zum Stand der Technik der Dichtungsschlauch gegen den Druckübertragungsring entlang dessen Umfangsrichtung angesetzt und dieser kann als Widerlager für den mit Hilfe des Stahlbandes gegen denselben angedrückten Dichtungsschlauch ebenso gut dienen. So können auch bei der herkömmlichen Dichtung zwei Dichtungen auf einem Tragring aufgezogen und auf der Rohrinnenseite über eine Nut eingebaut werden. Das herkömmliche Dichtsystem befindet sich nicht zwischen den beiden Rohrspiegeln und liegt somit im hydraulischen Innenraum der Rohrleitung. Es wird keine Krafteinleitung und somit keine Vorspannung der eigentlichen Dichtung durch den Tragring erzeugt. Hier dient der Tragring nur für den sicheren Halt und Schutz der Dichtungen. Es werden nur die beiden Dichtungen mit einer Vorspannung auf den Tragring aufgezogen.

Und genau hier liegt das eigentliche Problem. Dieses System kann so nicht nachträglich in eine Rohrleitung eingebaut werden, da der Tragring einen größeren Durchmesser hat als der Rohrinnendurchmesser. Es muss also schon im Zuge des Kanalneubaus mit eingebaut werden. Ist also kein System für eine später auftretende Sanierungsbedürftigkeit einer undichten Rohrverbindung. Dieses System widerspricht den geltenden DIN-Normen für eine fachgerechte Rohrverlegung, da keine Sichtprüfung der Rohrverbindung mehr stattfinden kann, wenn es, wie oben beschrieben, schon beim Neubau mit eingebaut wird. Auch die Überprüfung der äußeren Dichtung, die eigentliche Dichtung der Rohrverbindung, kann nicht mehr auf Funktionstüchtigkeit durch eine sogenannte Einzelmuffenprüfung nach DIN EN 1610, bzw. DWA A 139, überprüft werden. Gleichzeitig unterliegt diesem System einem Fehler. Im Zuge der Rohrvortriebsarbeiten werden die Druckübertragungsringe verformt. Das Maß der Verformung kann im Vorfeld nicht berechnet werden, da es von der Höhe der Mantelreibung abhängt. Je größer die Mantelreibung, umso größer die Verformung des Druckübertragungsrings. Somit ändert sich erst im Zuge des Vortriebs der Abstand der beiden Rohrspiegel. Ein weiteres Problem ist die konstruktionsbedingt dünner werdende statisch ansetzbare Wandstärke des Rohres durch die für das System herzustellende Aufnahmenut. Hierdurch wird zwangsläufig die Wandstärke reduziert. Wenn noch eine einzuhaltende Betondeckung der Bewehrung von 4 bis 5 cm hinzukommt, verbleibt eine geringere Wandstärke zur Übertragung der einzuleitenden Vortriebskräfte bei der statischen Berechnung der zulässigen Vortriebskräfte für das Rohr.

Mit Hilfe des erfindungsgemäßen Verfahrens kann in einem ersten Schritt aus dem Stoßbereich der aneinander angrenzenden Rohrenden die um die Mitte-Längsachse der Rohrverbindung oder der Rohre umlaufende Aufnahmenut ausgefräst werden; die Aufnahmenut kann aus den beiden Enden der Rohre, also beidseitig, unter Ausbildung von den beiden Nutgründen und beiden Nutflanken oder aus einem Ende eines Rohrs, also einseitig, unter Ausbildung von einem Nutgrund und einer Nutflanke ausgefräst werden. In der Ausgestaltung mit beidseitiger Ausfräsung kann in einem zweiten Schritt der Dichtungsschlauch gegen die beiden Nutgründe und beide Nutflanken angesetzt oder in der Ausgestaltung mit einseitiger Ausfräsung gegen einen Nutgrund und eine Nutflanke des einen Rohrs und ein Spitzende des anderen Rohrs angesetzt werden. Im dritten Schritt kann das Stahlband gegen den Dichtungsschlauch mit oder ohne Kraftbeaufschlagung angesetzt werden.

Bei herkömmlichen Rohrverbindungen mit Vortriebsrohren, deren Spitzenden unmittelbar aneinander angrenzen, also Fläche auf Fläche anliegend angeordnet sind, oder mit / oder ohne Druckübertragungsring voneinander beabstandet sind, können auch mit Hilfe des erfindungsgemäßen Verfahrens in einem ersten Schritt aus dem Stoßbereich der aneinander angrenzenden Rohrenden die um die Mitte-Längsachse der Rohrverbindung oder der Rohre umlaufende Aufnahmenut ausgefräst werden; die Aufnahmenut kann aus den beiden Enden der Rohre, also beidseitig, oder aus einem Ende eines Rohrs, also einseitig, ausgefräst werden. In der Ausgestaltung mit beidseitiger Ausfräsung kann der Dichtungsschlauch im zweiten Schritt gegen die beiden Nutgründe und beide Nutflanken angesetzt oder in der Ausgestaltung mit einseitiger Ausfräsung gegen einen Nutgrund und eine Nutflanke des einen Rohrs und ein Spitzende des anderen Rohrs angesetzt werden. Im dritten Schritt kann das Stahlband gegen den Dichtungsschlauch mit oder ohne Kraftbeaufschlagung angesetzt werden.

Die Position z.B. des hölzernen Druckübertragungsrings zwischen der Stirnseite des Spitzendes auf der einen Seite und dem Muffenspiegel, der der Stirnseite gegenüberliegt, auf der anderen Seite kann infolge der Druckbeaufschlagung sich ändern, der Druckübertragungsring kann auch infolge Fäulnis und/oder Abnutzung nicht mehr vorhanden sein, so dass z.B. einseitig ein Teil eines Endes oder beidseitig Teile beider Enden der Rohre im Bereich der, wie durch Stirnseiten begrenzten, Stoßfuge oder im Stoßbereich abgetragen werden können zur Bereitstellung von Abbruchabschnitten, die den Dichtungsschlauch zumindest auch teilweise aufzunehmen vermögen. Der Druckübertragungsring kann als Holzring ausgestaltet sein.

Ein Teil des Druckübertragungsrings kann ausgefräst und in einem weiteren Schritt mit einer schnelltrocknenden Mörtelmasse überzogen oder beschichtet werden, um ggf. Unebenheiten oder kleine geringfügige Risse, die durch das Ausfräsen entstehen, zu beseitigen. Ebenso kann der Druckübertragungsring ohne Ausfräsung eines desselben mit der schnelltrocknenden Mörtelmasse überzogen oder beschichtet werden, um ggf. Unebenheiten oder kleine geringfügige Risse, die durch das Ausfräsen entstehen, zu beseitigen.

Als Mörtelmasse kann verwendet werden ein herkömmlicher Mörtel oder eine Mischung mit herkömmlichem Mörtel, der beispielsweise neben feingemahlenem Zement einen Erstarrungsbeschleuniger, einen Stabilisierer zur Vermeidung dessen Entmischung, und einen feinkörnigen Zuschlagsstoff, wie Sande, enthalten kann. Zudem kann als Mörtelmasse schnelltrocknender oder -härtender mineralischer Mörtel Anwendung finden, der Polymethylmethacrylat-Verbindungen auch enthalten kann, die durch radikalische Polymerisation von Methacrylsäuremethylester hergestellt werden kann. Die Mörtelmasse kann auch ein herkömmlicher PCC-Mörtel sein.

In die Aufnahmenut, die von dem von der Schicht aus Mörtelmasse gebildeten Nutgrund und von den von der Stirnseite des Spitzendes und dem Muffengrund der Muffe gebildeten Nutflanken ausgestaltet wird, wird in einem weiteren oder in einem ersten Schritt, welchem Schritt keine Ausfräsung vorangeht, der Dichtungsschlauch eingesetzt oder eingedrückt.

Der Dichtungsschlauch enthält ein elastisches kunststoffartiges Material und kann beispielsweise ein Styrol-Butadien-Kautschuk-artiges Material (SBR) enthalten. Die Nutflanken können auch zumindest teilweise von den die Abbruchabschnitte seitlich begrenzenden Flanken, die ebenso eine Schicht mit der Mörtelmasse aufweisen können, ausgebildet werden.

Das elastische kunststoffartige Material kann als ein geschlossen zelliges und/ oder geschlossen poriges Material ausgebildet sein, das als Ethylen/Propylen-Dien-Terpolymer, z.B. Ethylen-Propylern-Elstomer-Kunststoff, auch EPDM-Kautschuk genannt, und/oder Naturkautschuk enthalten kann. Wesentlich ist, dass das elastische kunststoffartige Material des Dichtungsschlauches wasserdicht ist.

Das elastische kunststoffartige Material für den Dichtungsschlauch kann herkömmliche Elastomere, z.B. IIR Butyl-Kautschuk, CO/ECO Epichlorhydrin-Kautschuk, FPM FluorKautschuk, HNBR Hydr. Acrylnitrilbutadien-Kautschuk, CSM Chlorsulfoniertes Polyethylen, EPDM Ethylen-Propylen-Dien-Kautschuk, CR Chloropren-Kautschuk, NBR AcrylnitrilButadien-Kautschuk, EU/AU Polyurethan-Kautschuk, Polyamid (PA), Polyurethan (PU), Ethylenvinylacetat (EVA), Polyethylen (PE), oder Mischungen derselben enthalten.

Im Sinne der Erfindung wird unter dem Styrol-Butadien-Kautschuk-artigen Material verstanden ein Kunststoff für mit Copolymeren aus Styrol und Butadien, die die beiden Monomere häufig in einem Gewichtsverhältnis von 23,5 zu 76,5 oder auch 40 zu 60 enthalten können. Die Herstellung solcher Styrol-Butadien-Kautschuke können erfolgen nach herkömmlichen Verfahren der Emulsionspolymerisation oder Lösungspolymerisation. Im Fall der Emulsionspolymerisation in Wasser, die mit Redoxinitiatoren bei tiefen Temperaturen oder auch bei höheren Temperaturen als Kalt- bzw. Heißkautschuk mit Persulfaten gestartet werden können, liefern Latices die als solche verwendet werden können; die Molmassen der SBR-Kunststoffe können in einem Bereich von 250 bis 800.000 g/mol liegen.

Als weiteres kunststoffartiges Material für den elastischen Dichtungsschlauch können Kunststoffe wie EPDM verwendet werden. Im Sinne der Erfindung kann auch unter EPDM verstanden werden Ethylen/Propylen-Dien-Terpolymere oder Ethylen-Propylen-Elastomere. Diese kunststoffartigen Materialien können durch Terpolymerisation von Ethylen und größeren Anteilen Propylen sowie einigen Prozenten eines dritten Monomers mit Dien-Struktur hergestellt werden, in dem das Dien-Monomer die für eine anschließende Schwefel-Vulkanisation benötigten Doppelbindungen bereitstellt. Als Dien-Monomere können vorwiegend cis, cis-1,5-Cyclooktadien (COD), exo-Dicyclopentadien (DCP), endo-Dicyclopentadien (EDCP) und 1,4 Hexadien (HX), wie auch 5-Ethyliden-2-norbornen (ENB), Verwendung finden.

Im Sinne der Erfindung wird unter Dichtungsschlauch auch ein Dichtungsband oder ein Kompressionsband verstanden, da das Kompressionsband dauerhaft rückformbar ausgebildet ist und sich unter Kraftbeaufschlagung vollflächig gegen die Seiten, die den Raum der Aufnahmenut begrenzen, dauerelastisch anzuschmiegen vermag, so das auch bei einem später auftretenden Versatz der Enden der Rohre zueinander die Dichtheit der mit dem erfindungsgemäßen Verfahren bereitgestellten Rohrverbindung aufrecht erhalten bleibt.

Der elastische Dichtungsschlauch kann zur Ausbildung dessen Ringförmigkeit aus mehreren Teilen zusammengesetzt und deren Enden miteinander verklebt sein. Der elastische, ringförmige Dichtungsschlauch kann ebenso gut aus nur einem Stück ausgebildet sein, dessen beiden Enden miteinander verklebt sind, welcher als einstückig oder Vollkunststoffschlauch oder -ring im Sinne der Erfindung auch bezeichnet werden kann.

Der elastische, ringförmige Dichtungsschlauch kann einen größeren Innendurchmesser und/oder eine größere Breite aufweisen als der Durchmesser oder die Breite der Aufnahmenut, so dass der Dichtungsschlauch nicht nur gegen den Nutgrund elastisch, sondern gleichfalls elastisch gegen die Nutflanken der Aufnahmenut vollflächig anzuliegen und in Unebenheiten einzudringen vermag, um die erwünschte Abdichtung bereitzuhalten.

Der Dichtungsschlauch kann in die Aufnahmenut eingeschlagen werden, um zumindest einen vorläufig hinreichenden Ortssitz in derselben bereits ohne Ansetzen des Stahlbandes bereitzustellen. In einer anderen Ausgestaltung des erfindungsgemäßen Verfahrens weist der in die Aufnahmenut eingeschlagene Dichtungsschlauch eine Kompression von 30 bis 40%, verglichen mit seinem unbelasteten Zustand, auf.

Der Dichtungsschlauch kann eine oder mehrere in demselben sich erstreckende Kammern aufweisen, die bei Bedarf aktiviert, wie mit Luft oder einem herkömmlichen, vorzugsweise polymerisierbaren, wie schnell härtenden, Dichtungsmaterial, z.B. Polyurethan- und/oder Epoxid-Harz, druckbeaufschlagt werden. Die Druckbeaufschlagung unterstützt die Abdichtung der Aufnahmenut bzw. des Stoßbereichs.
- Darüber hinaus ist auch von Vorzug, wenn durch das Einsetzen des ringförmig ausgestalteten in Umfangsrichtung quer geschlitzten, Stahlbandes oder -rings gegen den Dichtungsschlauch der Dichtungsschlauch mit Kraft beaufschlagt wird, so dass der Dichtungsschlauch in die Aufnahmenut soweit hinzukommend eingedrückt wird, dass dieser ebenso dauerhaft abdichtend gegen die Nutflanken und den Nutgrund gehalten wird. Das Stahlband eignet sich auch als Widerlager, wobei zur Aufrechterhaltung der Dauerhaftigkeit der Abdichtung durch den Dichtungsschlauch die Enden des Stahlbandes mittels einer Spreizschere so weit auseinandergespreizt werden, dass entweder die Enden kraftbeaufschlagt Stoß an Stoß bzw. Stoß auf Stoß anliegen, oder zwischen die gegenüber liegenden Enden des Stahlbandes ein stahlbandartiges Formstück eingesetzt wird, gleichfalls Stoß auf Stoß. Auch kann in einer besonderen Ausführungsform das Stahlband elastisch oder verformbar ausgebildet sein.

Durch das dauerhafte kraftbeaufschlagte Ansetzen des Stahlbandes gegen den in der Aufnahmenut eingedrückten Dichtungsschlauch verbleibt die Abdichtung ebenso dauerhaft undurchlässig bevorzugterweise für flüssige Medien gegenüber Drücken von 1,5 bis 4,0 bar, vorzugsweise 2,0 bis 3,5 bar, noch mehr bevorzugt 1,5 bar oder 2,0 oder 2,5 bar.

Es zeigt sich, dass durch das kraftbeaufschlagte Ansetzen des Stahlbandes gegen den elastischen Dichtungsschlauch die erfindungsgemäße Rohrverbindung weiterhin umfassend abgedichtet ist und auch bei noch auftretenden Bodensetzungen, beispielsweise bedingt durch den Schwerlastverkehr und dessen Vibrationen, die auf das Erdreich und auf die in diesem befindlichen Rohrleitungen übertragen werden, keine Undichtigkeiten auftreten.

Im Sinne der Erfindung kann unter Stahlband auch ein Band verstanden werden, welches korridierbaren Schwarzstahl, sonstige Stahllegierungen, wie Edelstahl, Schiffsstahl, und/oder einen sonstigen metallenen und/oder kunststoffartigen Werkstoff enthalten kann; im Sinne der Erfindung wird unter Stahlband auch ein Ring verstanden. Das Stahlband kann eine bevorzugterweise glatte oder eine raue Oberfläche aufweisen. Die raue Oberfläche eignet sich besonders zur innigen Verbindung zwischen dem Dichtungsschlauch und dem gegen ihn angesetzten Stahlband.

Das Stahlband wird in einer Ausgestaltung des erfindungsgemäßen Verfahrens gegen den Dichtungsschlauch im mittigen Bereich desselben angesetzt, wobei das Stahlband durch das Ansetzen von mehreren Abstandshaltern zwischen die Stirnseiten der Enden der Rohre, wie der Abwasserrohre, und die den Stirnseiten zugewandten Seiten des Stahlbandes auf übereinstimmenden oder vorbestimmten Abstand zu den Stirnseiten gehalten wird; anschließend wird in die beiden Abstandsbereiche, die von den Stirnseiten der Abwasserrohre und den Seiten des Stahlbandes ausgestaltet sind, eine herkömmliche, vorzugsweise rasch polymerisierbare, Kunststoffmasse, z.B. Epoxid-Harz, eingegossen. Als Kunststoffmasse eignen sich die u.g. Dichtungsmaterialien, die Kunststoffmasse kann fortlaufend oder unterbrochen in den beiden Abstandsbereichen angeordnet sein; nach dem Polymerisieren der Kunststoffmasse werden die Abstandshalter entfernt. Die Kunststoffmasse kann elastisch oder unelastisch sein. Die Abstandshalter können kunststoffhaltige, metallene und /oder holzartige Werkstoffe enthalten. Die Abstandshalter können eben so gut unelastisch oder elastisch ausgestaltet sein.

In einem weiteren Schritt des erfindungsgemäßen durch leicht durchführbaren, kostengünstigen Verfahrens, kann ein flüssiges, polymerisierbares nach der Polymerisation elastisch verbleibendes Dichtungsmaterial in einen Zwischenraum eingespritzt werden, welcher sich im Bereich zwischen dem Spitzende und der Muffe befindet.

Als Dichtungsmaterial oder Kunststoffmasse eignen sich herkömmliche kunststoffartige Materialien, wie Schaumharze, welche mindestens einen Vertreter der Polyurethan-Verbindungen (PUR), Epoxid-Verbindungen (EP), wie Epoxidharze, Schaumkunststoffe, wie Polystyrole (PS), Styrol-Copolymere, Polymethacrylimide, Harnstoff-Harze (UF-Schäume), Polyamide, usw. umfassenden Gruppe enthalten können, die zur Einspritzung sich eignen können.

Im Sinne der Erfindung wird unter Muffe verstanden, dass das eine Ende des anderen Abwasserrohres als Spitzende ausgebildet ist, das eine Ende des einen Rohres als Muffe, das Spitzende in dieses derart formschlüssig eingreift, dass der zwischen dem Spitzende und der Muffe befindliche Spalt von der, z.B. glocken- oder haubenförmigen, Erweiterung des einen Endes, z.B. in Form einer Rindmuffe, zumindest teilweise übergriffen wird. Der Zwischenraum oder Spalt zwischen der Stirnseite des Spitzendes und dem der Stirnseite benachbarten Spiegelgrund, auch Muffengrund genannt, wird als Stoßfuge verstanden und ist bei herkömmlichen Muffenverbindungen mit dem Druckübertragungsring, der aus einem holzartigen Material bestehen kann, überbrückt.

Der der Stirnseite des Spitzendes abgewandte Bereich des Spitzendes weist mindestens einen gegen das Spitzende elastisch anliegenden Dichtungsring auf; in einer anderen Ausgestaltung der Rohrverbindung können zwei gegen das Spitzende elastisch anliegende Dichtungsringe, die voneinander beabstandet sind, angeordnet sein. Diese Dichtungsringe können beispielsweise im Querschnitt in unbelastetem Zustand ringförmig, dreieckig oder keilförmig ausgestaltet sein. Der zwischen dem Dichtungsring und einem Teil des Spitzendes und/oder einem Teil der Muffenflanke gebildete Innenraum kann als Prüfraum dienen, um festzustellen, ob die Dichtung der Rohrverbindung, insbesondere der Muffenverbindung, hinreichend dicht ist. Ebenso kann der zwischen den beiden Dichtungsringen, einem Teil des Spitzendes und einem Teil der Muffenflanke gebildete Innenraum als Prüfraum zur Prüfzwecken dienen, ob die Dichtung der Muffenverbindung hinreichend dicht ist.

In einer Ausgestaltung des erfindungsgemäßen Verfahrens kann von dem Inneren des Spitzendes bzw. Rohrendes aus ein Bohrloch getrieben werden durch die eine Seite des Spitzendes hin in Richtung zu dem Innenraum. Dieses Bohrloch dient als Prüf- oder auch als Entlüftungsrohr.

In einer weiteren Ausgestaltung des erfindungsgemäßen leicht durchführbaren kostengünstigen Verfahrens kann durch das Einspritzen des Dichtungsmaterials, z.B. in den Zwischenraum, der zumindest von einen Teil des Spitzendes und dem Dichtungsring oder von dem der Stirnseite zugewandten Dichtungsring ausgebildet wird, die durch den elastischen Dichtungsschlauch und das Stahlband bereitgestellte Abdichtung noch hinzukommend wirkungsvoll unterstützt sein. Im Fall der Abdichtung von stark undichten Spalten oder Fugen kann als sogenannte Vorabdichtung, zum Beispiel eine, vorzugsweise schnell polymerisierbare, Kunststoffmasse
in den dem Inneren der Rohre abgewandten Bereich des Spaltes oder Fuge
und/oder
in den Innenraum, der zwischen zwei Dichtungsringen sich befinden kann,
und/oder
in den Zwischenraum, der von einem Dichtungsring und dem Druckübertragungsring ausgebildet sein kann,
eingespritzt werden, so dass die aufzutragende Mörtelmasse nicht durch, zum Beispiel von außen in das Innere der Rohre eindringende Flüssigkeit, wie Grundwasser, abgeschwämmt wird. Die Beschichtung mit der Mörtelmasse, auch Aufmörtelung genannt, kann auch zum Beispiel erforderlich sein zur Verkleinerung des abzudichtenden Spaltes oder Stoßbereichs oder Aufnahmenut.

In einer Ausgestaltung des erfindungsgemäßen Verfahrens können Prüfnadeln durch in dem Stahlband angeordnete Durchbrüche hindurchgeführt und durch den Dichtungsschlauch und ggf. durch den Druckübertragungsring soweit hindurchgetrieben werden, dass deren Spitzen sich in dem Raum zwischen dem Dichtungsschlauch und der glockenförmigen Muffe oder zwischen dem, Druckübertragungsring und Mantel befinden kann. Der Raum kann dem Zwischenraum entsprechen. An die Prüfnadeln werden eine oder mehrere herkömmliche Druckmesseinrichtungen angeschlossen, die den Raum mit einem Gas, wie atmosphärischer Luft, und/oder Wasser und/oder einem sonstigen flüssigen Medium druckbeaufschlagen, um den Druck eine vorbestimmte Zeitdauer lang in dem Raum zwecks Dichtheitsprüfung zu überwachen.

In einer weiteren Ausgestaltung des erfindungsgemäßen Verfahrens können die Prüfnadeln nach deren Einführung mit der sie umgebenden Wandung verklebt werden. Auch können stattdessen die Prüfnadeln über bereits vorbereitete Gewinde in die Bohrung des Stahlbandes bzw. in die in den Durchbrüchen des Stahlbandes eingefrästen Innengewinde eingeschraubt oder mit diesen verschraubt werden. Gleichfalls können die Prüfnadeln über bereits vorbereitete Gewinde in die Bohrung des Stahlbandes bzw. durch die in den Durchbrüchen des Stahlbandes eingefrästen Innengewinde -mit Klebstoff verseheneingeschraubt oder mit diesen verschraubt werden.

Ebenso ist es möglich, dass in den Raum über die Prüfnadeln eine herkömmliche Kunststoffmasse oder Dichtungsmaterial
eingespritzt wird, um zusätzlich eine Abdichtung bereitzustellen. Als Kunststoffmasse eignet sich eine rasch polymerisierbare Kunststoffmasse, z.B. Epoxid-Harz.

Durch das erfindungsgemäße kostengünstige Verfahren zeigt sich eine dauerhafte Abdichtung der sanierten Muffenverbindung.

Weiterhin erweist sich die Abdichtung derart wirkungsvoll, weil auch in Gegenwart von durch Bodensenkung eintretende Lageverschiebung oder Muffenversatz die über die erfindungsgemäße Rohrverbindung, wie Muffenverbindung, miteinander verbundenen Rohre wirkungsvoll abgedichtet gegenüber Infiltration und Exfiltration verbleiben.

Hinzukommend wird durch die in heutigen Zeiten bedingten steten Erschütterungen, die durch den Schwerlastverkehr bedingt rhythmisiert sind und sich wellenförmig in dem Erdreich fortsetzen, zwar Relativbewegungen der Rohre zueinander eintreten, gleichwohl reicht die Elastizität der erfindungsgemäßen Rohrverbindung aus, um die Relativbewegungen dichtend auszugleichen.

Ebenso erübrigen sich durch die wirkungsvolle Abdichtung mithilfe des erfindungsgemäßen Verfahrens die herkömmlichen kostenträchtigen Reliningverfahren oder auch die herkömmlichen Berst- und Fräsverfahren oder Montageverfahren in der offenen Bauweise oder geschlossenen Bauweise.

Gerade durch das erfindungsgemäße Verfahren zeigt sich, dass die sehr kostenträchtige Sanierungsweise des Ersetzens der Rohre in der aufstromigen und abstromigen offenen Bauweise vorteilhafterweise vermieden wird, so dass das erfindungsgemäße Verfahren sich besonders für die Beseitigung von Muffenundichtigkeiten von begehbaren Abwasserrohren sogar aufdrängt.

Die erfindungsgemäße dauerhafte hochbelastbare Rohrverbindung zwischen zwei Abwasserrohrenden umfasst das eine Ende des einen Abwasserrohres und das eine Ende des anderen Abwasserrohres.

Eine besondere Ausgestaltung der erfindungsgemäßen dauerhaften hochbelastbaren Rohrverbindung umfasst die Muffe als das eine Ende des einen Abwasserrohres und das Spitzende als das eine Ende des anderen Abwasserrohres, welches von der Muffe aufgenommen ist. Der zuweilen zwischen der Stirnseite des Spitzendes und dem Muffengrund befindliche Druckübertragungsring, in herkömmlichen Rohr- bzw. Muffenverbindungen aus Holz, kann soweit teilweise abgefräst sein, dass die durch die Ausfräsung oder Abfräsung des Druckübertragungsrings gebildete Aufnahmenut mit einer Mörtelmasse, die leicht auftragbar und schnellhärtend sein kann, überzogen sein kann. Ebenso kann, ohne dass die Aufnahmenut die Mörtelmasseschicht aufweist, der Dichtungsschlauch in die Aufnahmenut in einer Ausgestaltung der erfindungsgemäßen dauerhaften hochbelastbaren Rohrverbindung eingedrückt sein. In einer zusätzlichen Ausgestaltung der erfindungsgemäßen dauerhaften hochbelastbaren Rohrverbindung ist hingegen der Dichtungsschlauch in die Aufnahmenut eingedrückt, soweit vorhanden auch gegen die Mörtelmasseschicht, und gegen die beiden gegenüberliegenden Nutflanken der Aufnahmenut gedrückt, welche von einem Teil der Stirnseite des Spitzendes und einem Teil des Spiegelgrundes der, insbesondere glockenförmigen, Muffe gebildet wird.

In einer zusätzlichen Ausgestaltung der erfindungsgemäßen dauerhaften hochbelastbaren Rohrverbindung ist hingegen der Dichtungsschlauch in die Aufnahmenut eingedrückt und gegen die beiden gegenüberliegenden Nutflanken der Aufnahmenut gedrückt, welche von einem Teil der Stirnseite des Spitzendes und einem Teil des Spiegelgrundes der, insbesondere glockenförmigen, Muffe gebildet wird.

Der elastische Dichtungsschlauch ist dauerhaft kraftbeaufschlagt gegen die Aufnahmenut gedrückt durch das Andrücken des Stahlbandes gegen den Dichtungsschlauch, welches in Umfangsrichtung quer geschlitzt ist und dessen Enden so weit auseinandergespreizt sind, dass der elastische Dichtungsschlauch dichtend anliegt an die Nutflanken und den Nutgrund der Aufnahmenut. Die Dauerhaftigkeit der Kraftbeaufschlagung kann erreicht werden durch das Einsetzen eines stahlbandartigen Formstücks in den von den beiden auseinanderspreizten Enden gebildeten Abschnitt.

Es zeigt aich aber auch, dass die Eigenelastizität des Dichtungsschlauches hinreichend sein kann, so dass dieser dichtend gegen die Nutflanken und den Nutgrund der Aufnahmenut angesetzt ist, um die Aufnahmenut dauerhaft abzudichten.

In einer anderen Ausgestaltung der erfindungsgemäßen dauerhaften hochbelastbaren Rohrverbindung ist die Länge des Stahlbandes in seiner Umfangsrichtung größer als die von dem Dichtungsschlauch gebildete Kreisbahn, oder Umfangslänge oder Innenumfangslänge genannt, in Umfangsrichtung, so dass bereits durch das Auseinanderspreizen der den Schlitz bildenden Enden und Ansetzen der beiden Enden Stoß an Stoß aneinander das Stahlband hinreichend kraftbeaufschlagt gegen den Dichtungsschlauch angedrückt ist: das Stahlband kann aufgrund der auf den Dichtungsschlauch einwirkenden Kraft als Widerlager wirken und das dauerhafte vollflächige Anschmiegen des Dichtungsschlauchs gegen die den Raum der Aufnahmenut begrenzenden Seiten derselben auch bei steten durch Schwerlastverkehr erzeugten Erschütterungen unterstützen.

Außerdem können an der Innenseite des Stahlbandes in den Bereichen seiner beiden Enden, die den Schlitz begrenzen, Nocken angeformt sein, die als Ansatz für die beiden Zangenschenkel mit ihren Greifklauen der leicht handhabbaren Spreizschere dienen. Eine Spreizschere ist als eine Scharnierzange ausgebildet mit zwei Zangenschenkeln, welche in Übergangsbereichen in Schenkel übergehen, die miteinander mittels eines Scharniers drehbar verbunden sind. Die den Zangenschenkeln gegenüberliegenden Schenkel sind innenseitig miteinander über eine hydraulisch wirkende Einrichtung, wie eine Zylinder-Kolben-Einrichtung, verbindbar, so dass der Abstand der Zangenschenkel mit ihren Greifklauen zum Auseinanderspreizen der Enden des Stahlbandes kontrolliert angesteuert wird. Die leicht handhabbare Spreizzange wird mit ihren Greifklauen an die Nocken des Stahlbandes angesetzt und der Kolben in der Zylinder-Kolben-Einrichtung soweit bewegt, dass die Enden des Stahlbandes hinreichend weit voneinander für den Benutzer auf einfache Weise weit voneinander gespreizt werden.

Das erfindungsgemäße Verfahren ist gekennzeichnet durch Abtragen eines zwischen einem Ende des anderen Rohres und einem Ende des einen Rohres angeordneten, vorzugsweise hölzernen, Druckübertragungsrings und/oder eines Teils als Abbruchabschnitt zumindest eines Endes der Rohre zur Bereitstellung einer Aufnahmenut zum Einsetzen eines Dichtungsschlauchs in dieselbe und/oder Auftragen einer, vorzugsweise hochviskösen, Mörtelmasse auf den Druckübertragungsring und/oder auf mindestens eine der Fugenflanken des Abbruchabschnitts (zur Bereitstellung einer glatten Oberfläche, Einsetzen des Dichtungsschlauches in die Aufnahmenut, Ansetzen eines ringförmig ausgestalteten, geschlitzten Stahlbandes mit zwei Enden als Widerlager gegen den Dichtungsschlauch und Auseinanderspreizen der Enden des Stahlbandes voneinander zwecks Beaufschlagung des Dichtungsschlauches mit einer Kraft sowie form-, reib- und/oder kraftschlüssiges Verbinden der Enden, bevorzugterweise Verbinden der Enden durch Ansetzen der Enden des Stahlbandes aneinander Stoß auf Stoß oder Einsetzen eines Formstücks zwischen die Enden desselben Stoß auf Stoß.

### Ausführungsbeispiele

Die Zeichnungen zeigen aufgrund einer zeichnerischen Vereinfachung in schematischer, stark vergrößerter Weise, ohne Anspruch auf eine maßstabsgetreue Wiedergabe in
Fig. 1 den Längsschnitt durch eine Seite der erfindungsgemäßen Rohrverbindung von zwei benachbarten Vortriebsrohren mit Aufmörtelung,
Fig. 2 den Längsschnitt durch eine Seite der erfindungsgemäßen Rohrverbindung von zwei benachbarten Vortriebsrohren mit Aufmörtelung,
Fig. 3 den Längsschnitt durch eine Seite der erfindungsgemäßen Rohrverbindung mit einem glockenförmigen Rohrende und einem in diesem angeordneten Spitzende mit beidseitigen Abbruchabschnitten ohne Aufmörtelungen,
Fig. 4 den Querschnitt durch die erfindungsgemäße Rohrverbindung mit dem Druckübertragungsring, dem auf den Druckübertragungsring aufgetragenen Ausgleichsmörtel als Überzug, dem elastischen Dichtungsband und dem Stahlband,
Fig. 5 den Querschnitt durch das Stahlband mit seinen auseinander gespreizten Enden,
Fig. 6 die Draufsicht auf das Stahlband mit dem zwischen seinen auseinander gespreizten Enden eingesetzten stahlbandartigen Formstück (a) und seinen einander anliegenden Enden ohne Formstück (b),
Fig. 7 die Spreizschere im geschlossenen Zustand,
Fig. 8 die Spreizschere im gespreizten Zustand,
Fig. 9 den Längsschnitt durch eine Seite der erfindungsgemäßen gebogenen Rohrverbindung von zwei benachbarten Vortriebsrohren mit einem einseitigen Abbruchabschnitt 41 und einer infolge Aufmörtelung einer Nutflanke 41a bereitgestellten Mörtelschicht 41b sowie dem eine Kammer aufweisenden Dichtungsschlauch zur Aktivierung und einem von einer Stirnseite eines Endes eines Rohrs infolge einer Rohrverbindungskrümmung bedingten im äußeren Bereich derselben beabstandeten Druckübertragungsring 3
   und
Fig. 10 den Längsschnitt durch eine Seite der erfindungsgemäßen geradlinig verlaufende Rohrverbindung von zwei benachbarten Vortriebsrohren mit einem einseitigen Abbruchabschnitt mit Aufmörtelung sowie dem eine Kammer aufweisenden Dichtungsschlauch zur Aktivierung und einem an einer Stirnseite eines Endes eines Rohrs anliegenden Druckübertragungsring 3
   sowie
Fig. 11 den Querschnitt durch die erfindungsgemäße Rohrverbindung mit dem Druckübertragungsring, dem auf den Druckübertragungsring aufgetragenen Ausgleichsmörtel als Überzug oder Mörtelschicht, dem elastischen Dichtungsband und dem Stahlband.

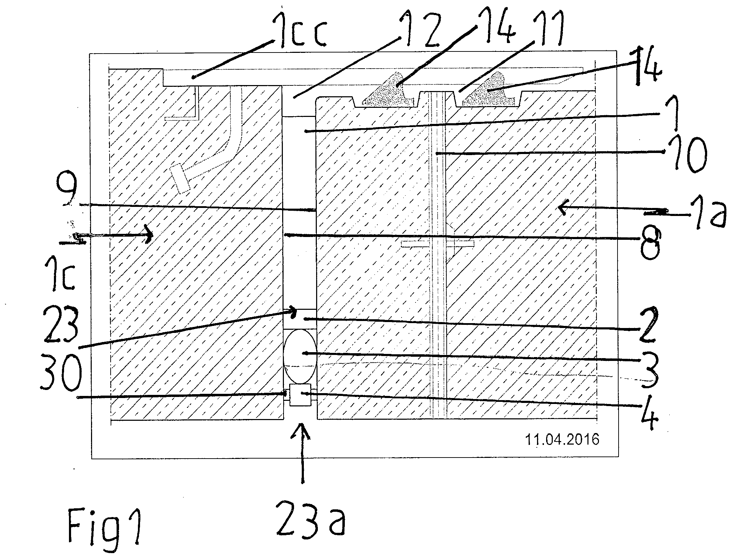

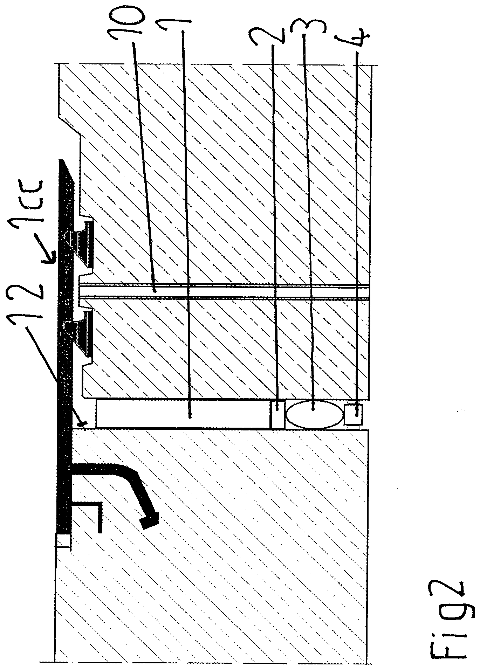

Das eine Ende 1a des anderen Rohres z.B. Abwasservortriebsrohres, ist als Spitzende ausgebildet und weist einen mit dem sonstigen Teil des anderen Rohres, z.B. des Abwasservortriebsrohres, übereinstimmenden Innendurchmesser auf; das eine Ende 1c des einen Abwasserrohres hat auch einen mit dem sonstigen Teil des einen Abwasserrohres übereinstimmenden Innendurchmesser, wobei beide Innendurchmesser annähernd einander identisch sind. Gegen das eine Ende 1a des anderen Abwasserrohres und gegen das eine Ende 1c des einen Abwasserrohres liegt ein rohrförmiger Mantel 1cc, auch Überschiebkupplung, Führungsring, Stahlmanschette oder Führungsmanschette genannt, Fläche auf Fläche, an, welcher in Umlaufrichtung sich erstreckt und mit einem Ende 1c des Rohres mittels Anker 60 verbunden ist. Im Sinne der Erfindung kann man unter Mantel auch eine lose Muffe verstehen. Die Stoßfuge 40, auch -bereich genannt, wird von der Stirnseite 9 des Spitzendes 1a des anderen Abwasserrohres und von der von der Stirnseite 9 beabstandeten Stirnseite 8 des einen Abwasserrohres begrenzt bzw. gebildet, in welcher der holzartige Druckübertragungsring 1 eingesetzt ist. Im Bereich, welcher der Stirnseite 9 des Spitzendes 1a abgewandt ist, ist ein Dichtungsring 14 angeordnet (nicht gezeigt), in einem anderen Ausführungsbeispiel sind mindestens zwei Dichtungsringe 14 angeordnet, die zumindest im nicht beaufschlagten Zustand keilförmig ausgebildet sind (Fig. 1, Fig. 2).

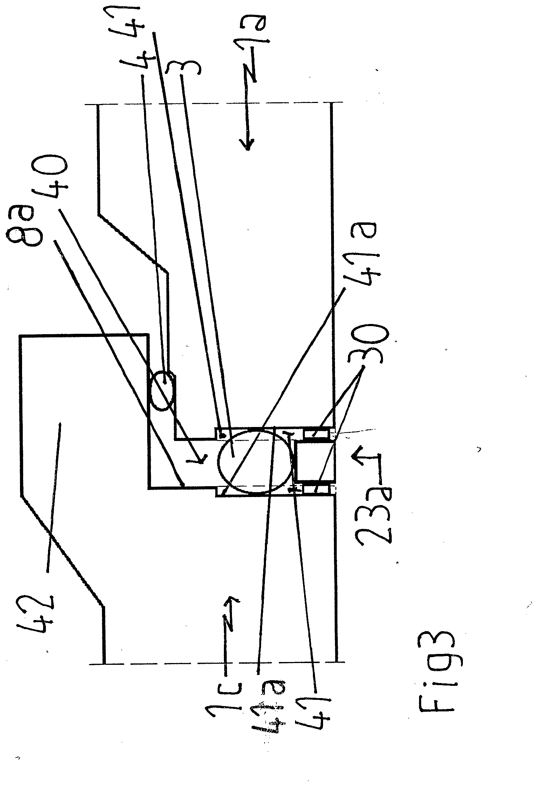

In einem weiteren Ausführungsbeispiel sind das eine Ende 1a des anderen, z.B. in Offenbauweise verlegten, Abwasserrohres als Spitzende 1a, das eine Ende 1c des einen, z.B. in Offenbauweise verlegten, Abwasserrohres als glockenförmige Muffe 42 ausgebildet, wobei das Spitzende 1a seitlich formschlüssig weitgehend in die Muffe eingreift und in der Stoßfuge 40, die von der Stirnseite 9 des Spitzendes 1a und dem Spiegelgrund 8a, oder Muffengrund genannt, der Muffe seitlich gebildet wird, der holzartige Druckübertragungsring 1 eingesetzt ist. Im Bereich, welcher der Stirnseite 9 des Spitzendes 1a abgewandt ist, ist ein Dichtungsring 14 oder in einem anderen Ausführungsbeispiel sind zwei Dichtungsringe 14 angeordnet, die zumindest im nicht beaufschlagten Zustand keilförmig ausgebildet sind (Fig. 3).

Der Raum zwischen den beiden Dichtungsringen 14, der hinzukommend von einem Teil der Muffe 42 oder des Mantels 1cc und einem Teil des Spitzendes 1a gebildet wird, wird Innenraum 11 genannt. Derjenige Bereich des Spaltes, der von dem vorderen Bereich des Spitzendes 1a und der Muffe 42 oder dem Mantel 1cc sowie von dem Druckübertragungsring 1 und dem der Stirnseite 8 des Spitzendes 1a zugewandten Dichtungsring 14 gebildet wird, wird Zwischenraum 12 genannt. In weiteren Ausführungsbeispielen eignen sich der Innenraum 11 und / oder der Zwischenraum 12 sowohl zur Dichtheitsprüfung als auch zur Aufnahme von herkömmlicher in diese einspritzbarer polymerisierbarer Kunststoffmasse zwecks zusätzlicher Abdichtung derselben.

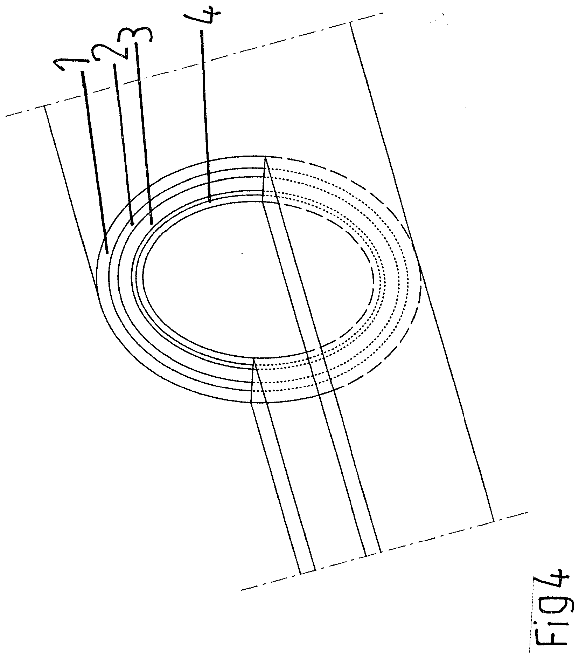

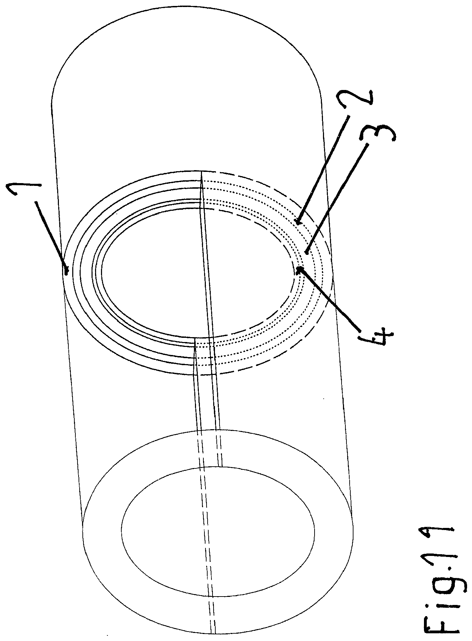

In einem Ausführungsbeispiel sind die Enden der Abwasserrohre, die als Vortriebsrohre verlegt sind, voneinander mit Hilfe des holzartigen Druckübertragungsrings voneinander beabstandet, der beim Vortrieb der Abwasserrohre als Druckübertragungseinrichtung und zur Beabstandung der Enden 1a, 1c der Vortriebsrohre voneinander dient; der Druckübertragungsring wird teilweise ausgefräst und mit der Mörtelmasse beschichtet. Daher wird in dem ersten Schritt ein Teil des Druckübertragungsrings 1 abgefräst oder abgetragen. Die abgetragene Oberseite des Druckübertragungsrings 1 wird -Aufmörtelung genannt- mit einer Mörtelmasse als Ausgleichsmörtel zur Bildung einer Mörtelschicht 2 überzogen, um eine weitgehende glatte Oberfläche bereitzuhalten, gegen welche der elastische Dichtungsschlauch 3 kraftbeaufschlagt angesetzt wird (Fig. 4, Fig. 11).

In einem anderen Ausführungsbeispiel sind die Enden 1a, 1c der Abwasserrohre, die offen verlegt sind, Stoß auf Stoß in ihrem Stoßbereich einander angesetzt und haben keinen Druckübertragungsring, so dass zu der Bereitstellung der Aufnahmenut 23a diese aus dem Stoßbereich ausgefräst und der Nutgrund 23 mit der Mörtelmasse beschichtet wird. Daher wird in dem ersten Schritt aus der Innenseite des Stoßbereichs 40 in Umlaufrichtung, wie um die Mitte-Längsachse desselben bzw. um die der Abwasserrohre, die Aufnahmenut abgefräst oder abgetragen. Die abgetragene Oberseite der Aufnahmenut wird mit der Mörtelmasse als Ausgleichsmörtel zur Bildung einer Mörtelschicht 2 überzogen, um eine weitgehende glatte Oberfläche bereitzuhalten, gegen welche der elastische Dichtungsschlauch 3 kraftbeaufschlagt angesetzt wird.

In einem weiteren Schritt wird der elastische Dichtungsschlauch 3 in diese Aufnahmenut 23a, die von der Ausgleichs- oder Mörtelschicht 2 und den beiden Flanken, Nutflanken 41a genannt, der Aufnahmenut 23a, nämlich einem Teil der Stirnseite 9 und einem Teil des Muffengrundes 8a, gebildet wird, eingefügt und mithilfe eines anschließend gegen den Dichtungsschlauch 3 in die Aufnahmenut 23a eingedrückten ringförmig verlaufenden Stahlbandes 4 kraftbeaufschlagt. Das Stahlband 4 ist in seiner Umfangsrichtung quer geschlitzt.

In einem anderen Ausführungsbeispiel weist der Dichtungsschlauch 3 eine in seinem Inneren sich erstreckende Kammer 3a auf, in die ein schnell härtendes Dichtungsmaterial oder Kunststoffmasse, wie Epoxid-Harz und/oder PU-Harz eingespritzt wird.

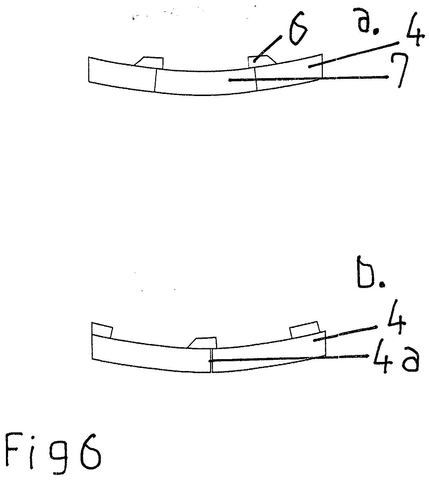

In einem Ausführungsbeispiel entspricht die Umfangslänge des Stahlbandes 4 weitgehend der Innenumfangslänge des elastischen Dichtungsschlauches 3, so dass die beiden Enden 4a , die den Schlitz des Stahlbandes 4 seitlich begrenzen, soweit auseinandergespreizt und gleichzeitig das Stahlband 4 gegen den elastischen Dichtungsschlauch 3 kraftbeaufschlagt gedrückt oder gepresst und die beiden Enden 4a Stoß auf Stoß aneinander angesetzt werden (Fig. 2, Fig. 6b). Durch die aneinander stoßenden Enden 4a des Stahlbandes gem. Fig. 6b wird bereits der Dichtungsschlauch 3 soweit kraftbeaufschlagt, dass die Abdichtung der erfindungsgemäßen Rohrverbindung dauerhaft ist und keine Undichtigkeiten auch bei Relativverschiebungen der Abwasserrohrenden zueinander auftreten.

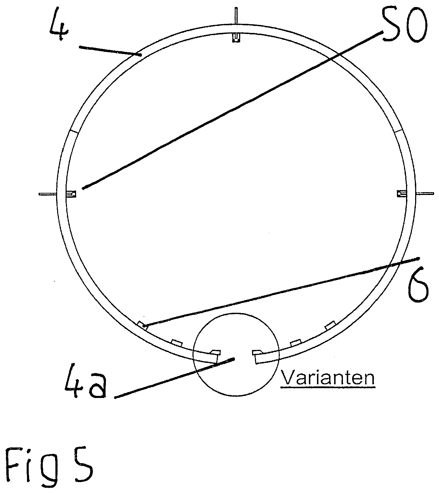

In einem weiteren Ausführungsbeispiel ist die Umfangslänge des Stahlbandes 4 geringfügig geringer als die Innenumfangslänge des elastischen Dichtungsbandes 3, wobei jedoch die Enden 4a, die den Schlitz des Stahlbandes 4 seitlich begrenzen, soweit auseinander voneinander gespreizt werden und voneinander beabstandet sind, dass in den Abschnitt zwischen den beiden auseinandergespreizten Enden 4a ein Formstück 7 vorbestimmter Länge bzw. Umfangslänge eingesetzt wird und das Stahlband 4 ebenso kraftbeaufschlagt dauerhaft gegen den elastischen Dichtungsschlauch 3 drückt (Fig. 5, Fig. 6a).

In einem weiteren Ausführungsbeispiel wird zumindest eine Prüfnadel 50 durch einen in dem Stahlband 4 ausgefrästen Durchbruch hindurchgeführt und durch den Dichtungsschlauch 3 und den Druckübertragungsring 2 hindurchgetrieben zwecks Überprüfung auf Dichtigkeit des Raums, z.B. des Zwischenraums 123, zwischen dem Druckübertragungsring 3 und Mantel 1cc oder der Muffe 42. An die Prüfnadel 50 wird eine herkömmliche Druckmesseinrichtung angeschlossen, der Raum über die Prüfnadel 50 mit einem Gas, wie atmosphärischer Luft, oder Wasser oder sonstige flüssige Medien druckbeaufschlagt und der Druck eine vorbestimmte Zeitdauer lang mit Hilfe der Druckmesseinrichtung überprüft zwecks Dichtheitsprüfung.

In einem zusätzlichen Ausführungsbeispiel wird über die Prüfnadeln 50 ein schnell härtendes Dichtungsmaterial oder Kunststoffmasse, wie Epoxid-Harz oder PU-Harz (Polyurethan-Verbindung), zwecks zusätzlicher Abdichtung des Raums bzw. des den Stoßbereich 40 überbrückenden Spaltes oder Aufnahmenut 23a injiziert.

In einem anderen Ausführungsbeispiel ohne Druckübertragungsring 1 wird die Prüfnadel 50 durch einen in dem Stahlband 4 ausgefrästen Durchbruch hindurchgeführt und durch den Dichtungsschlauch 3 hindurchgetrieben werden zwecks Überprüfung auf Dichtigkeit des Raums zwischen dem Dichtungsschlauch 3 und der Muffe 42 oder Mantel 1cc. In einem zusätzlichen Ausführungsbeispiel wird über die Prüfnadeln 50 ein schnell härtendes Dichtungsmaterial oder Kunststoffmasse, wie Epoxid-Harz oder PU-Harz, zwecks zusätzlicher Abdichtung des Raums eingspritzt.

In einem Ausführungsbeispiel kann in dem dem Inneren der Rohre abgewandten Bereich oder in dem Bereich, der zwischen der ursprünglich in dem Stoßbereich angeordneten Primärdichtung, wie Druckübertragungsring oder sonstigen Dichtung, und dem Mantel 1cc oder Muffe liegt, die Kunststoffmasse eingespritzt werden. Auch kann in den Zwischenraum 12 und/oder in den Innenraum 11 die Kunststoffmasse eingespritzt werden zwecks Verfüllung derselben. Der Raum, der zwischen dem Dichtungsschlauch und dem Mantel oder Muffe sich befindet, kann weiterhin nach Maßgabe des Umfangs der Verfüllung als Prüfraum zur Überwachung der Dichtigkeit verwendet werden.

In einem weiteren Ausführungsbeispiel wird das Stahlband 4 in einer Ausgestaltung des erfindungsgemäßen Verfahrens gegen den Dichtungsschlauch 3 im mittigen Bereich desselben angesetzt, wobei mehrere Abstandshalter 30 voneinander gleich beabstandet sind, so dass sie zwischen den Stirnseiten 8, 9 der Abwasserrohre und Seiten des Stahlbandes 4 auf übereinstimmenden Abstand das Stahlband 4 von den Stirnseiten 8, 9 halten. Die beiden Abstandsbereiche, die von den Stirnseiten 8, 9 der Abwasserrohre und den Seiten des Stahlbandes 4 ausgebildet sind, nehmen eine herkömmliche, vorzugsweise rasch polymerisierbare, Kunststoffmasse, die hart (unelastisch) oder elastisch ist, z.B. Epoxid-Harz und/oder PU-Harz, auf. Die Kunststoffmasse ist fortlaufend in Umfangsrichtung um die Mitte-Längsachse der Abwasserrohre angeordnet; nach der Polymerisation, auch Aushärtung genannt, der Kunststoffmasse werden die Abstandshalter 30 entfernt. Im Sinne der Erfindung wird auch unter Stoßfuge 40 der Bereich oder Abstandsbereich zwischen den Stirnseiten 8, 9 der Enden 1a, 1c der benachbarten Abwasserrohre verstanden; die Stirnseiten 8, 9 sind einander angrenzend oder voneinander beabstandet, also auseinander klaffend.

In einem besonderen Ausführungsbeispiel -ohne Druckübertragungsring 1- sind die beiden einander angrenzenden Enden 1a, 1c mit ihren Stirnseiten 8, 9 in Umfangsrichtung, also beidseitig, ausgefräst zur Bereitstellung der beiden gegenüberliegenden Abbruchabschnitte 41 (Fig. 3) mit Nutgründen 23 und Nutflanken 41a, auch Nutwangen genannt. Die Abbruchabschnitte 41 bilden zudem die Aufnahmenut 23a. Die Nutflanken 41a der Abbruchabschnitte 41 sind in diesem Ausführungsbeispiel nicht mit einer Mörtelmasse zur Oberflächenglättung beschichtet. Der Dichtungsschlauch 3 wird in die Aufnahmenut 23a eingedrückt und gegen die voneinander beabstandeten Nutgründe 23 der Abbruchabschnitte 41 und gegen die Nutflanken 41a angesetzt und dichtet aufgrund der Elastizität des Dichtungsschlauchs 3 den den Stoßbereich 40 überbrückenden Spalt hinreichend ab. Das Stahlband 4 wird gegen den Dichtungsschlauch 3 angesetzt und sichert als Widerlager das in Richtung hin zu dem Stahlband 4 möglicherweise einsetzende Bewegen des Dichtungsschlauchs 3 infolge von außen nach innen einwirkendem Flüssigkeitsdruck ab.

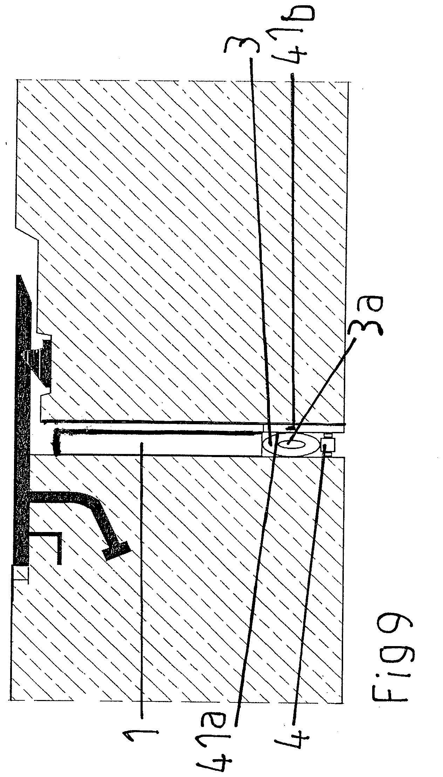

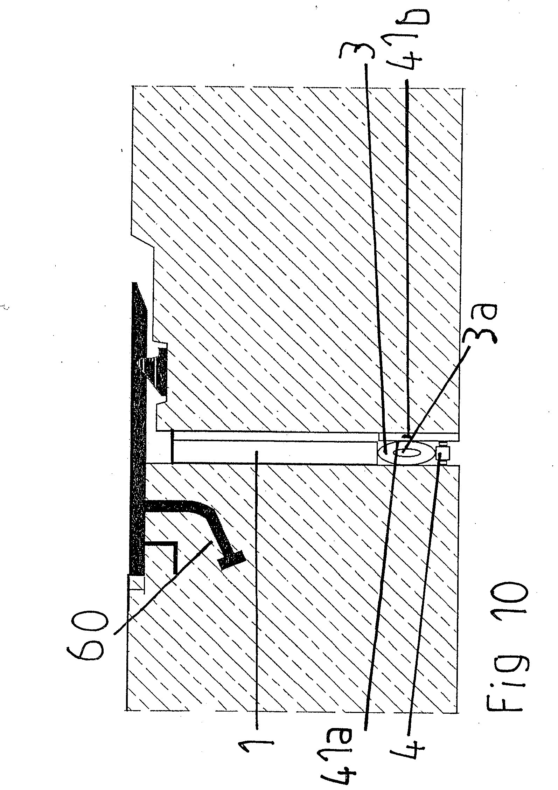

In einem weiteren besonderen Ausführungsbeispiel -mit dem Druckübertragungsring 1 - ist der Druckübertragungsring 1 von der Stirnseite 9 eines Endes 1a des anderen Rohrs infolge einer Rohrverbindungskrümmung beabstandet; ein Ende 1a mit seiner Stirnseiten 9 in Umfangsrichtung, also einseitig, ist ausgefräst zur Bereitstellung des Abbruchabschnitts 41 mit dem durch den Druckübertragungsring 1 bereitgestellten Nutgrund 23, der Nutflanke 41a des einen Endes 1c des einen Rohrs und der Nutflanke 41a, die ein Teil der Stirnseite 8 des einen Endes 1a ist. Die letztgenannte Nutflanke 41a des Abbruchabschnitts 41 ist mit einer Mörtelmasse zur Oberflächenglättung derselben beschichtet zur Bereitstellung der Mörtelschicht 41b mit sog. aufgemörtelter Nutflanke. Der Dichtungsschlauch 3 wird in die Aufnahmenut 23a eingedrückt und gegen die als Nutgrund 23 wirkende dem Mantel 1cc abgewandte Seite des Druckübertragungsrings 1 und gegen die mit der Mörtelschicht 41b versehene Nutflanke 41a und gegen die Nutflanke 41a als Teil der Stirnseite 8 kraftbeaufschlagt angesetzt und anschließend mit dem Stahlband 4 gesichert (Fig. 9. Fig. 10).

In einem zusätzlichen besonderen Ausführungsbeispiel -ohne Druckübertragungsring 1-sind die beiden einander angrenzenden Enden 1a, 1c mit ihren Stirnseiten 8, 9 in Umfangsrichtung, also beidseitig, ausgefräst zur Bereitstellung der Abbruchabschnitte 41 mit Nutgründen 23 und Nutflanken 41a. Die Nutflanken 41a der Abbruchabschnitte 41 sind mit einer Mörtelmasse zur Oberflächenglättung soweit beschichtet zur Bereitstellung von sog. aufgemörtelten Nutflanken, dass Nutgründe 41a der Abbruchabschnitte 41 als Ansetzflächen für den Dichtungsschlauch 3 verbleiben. Der Dichtungsschlauch 3 wird gegen die Nutgründe 23 der Abbruchabschnitte 41 und gegen die mit Mörtelschicht 41b versehenen Nutflanken 41a kraftbeaufschlagt angesetzt und anschließend mit dem Stahlband 4 gesichert.

In einem anderen Ausführungsbeispiel wird die Aufnahmenut 23a aus dem Druckübertragungsring und aus den beiden dem Druckübertragungsring 1 benachbarten Enden 1a, 1c mit ihren Stirnseiten 8, 9 der Rohre, also beidseitig, zur Bereitstellung der gegenüberliegenden Abbruchabschnitte 41 ausgefräst; die Mörtelmasse wird zur Bereitstellung der glatten Oberfläche als Mörtelschicht auf den Nutgrund 23 und auf beide Nutflanken 41a der Abbruchabschnitte 41 aufgetragen, wie aufgeputzt, oder es wird keine Mörtelmasse zur Aufmörtelung in einem ganz anderen Ausführungsbeispiel verwendet.

In einem anderen Ausführungsbeispiel wird die Aufnahmenut 23a aus dem Druckübertragungsring und aus den beiden dem Druckübertragungsring 1 benachbarten Enden 1a, 1c mit ihren Stirnseiten 8, 9 der Rohre, also beidseitig, zur Bereitstellung der gegenüberliegenden Abbruchabschnitte 41 ausgefräst; die Mörtelmasse wird zur Bereitstellung der glatten Oberfläche als Mörtelschicht auf den Nutgrund 23 und auf beide Nutflanken 41a der Abbruchabschnitte 41 aufgetragen, wie aufgeputzt.

In einem zusätzlichen Ausführungsbeispiel wird die Aufnahmenut 23a aus dem Druckübertragungsring und nur aus einem Ende mit Stirnseite 8 der beiden dem Druckübertragungsring 1 benachbarten Enden 1a, 1c der Rohre, also einseitig, zur Bereitstellung nur eines Abbruchabschnittes 41 ausgefräst; Mörtelmasse wird zur Bereitstellung der glatten Oberfläche als Mörtelschicht auf den Nutgrund 23 oder auf die Nutflanke 41a des Abbruchabschnitts 41 und auf die die Nutflanke der Aufnahmenut 23a bildende Stirnseite aufgetragen, wie aufgeputzt.

Durch das erfindungsgemäße Verfahren werden Prüfräume zwecks Dichtheitsprüfung bereitgestellt, so in Ausführungsbeispielen
der Zwischenraum 12
und/oder
der Innenraum 11
und/oder
in weiteren Ausführungsbeispielen ohne Druckübertragungsring 1 der von dem Dichtungsschlauch 3 und von der glockenförmigen Muffe 42 oder von dem Mantel 1cc gebildete Raum; in weiteren Ausführungsbeispielen ist in den Zwischenraum 12 und/oder den Innenraum 11 und/oder in Ausführungsbeispielen ohne Druckübertragungsring 1 in den von dem Dichtungsschlauch 3 und von der glockenförmigen Muffe 42 oder von dem Mantel 1cc gebildeten oder zumindest teilweise begrenzten Raum ein schnell härtendes Dichtungsmaterial oder Kunststoffmasse, wie Epoxid-Harz oder PU-Harz (Polyurethan-Verbindung), zwecks zusätzlicher Abdichtung des den Stoßbereich 40 überbrückenden Spaltes oder Aufnahmenut 23a, z.B. mittels Prüf- oder Injektionsnadeln, eingespritzt.

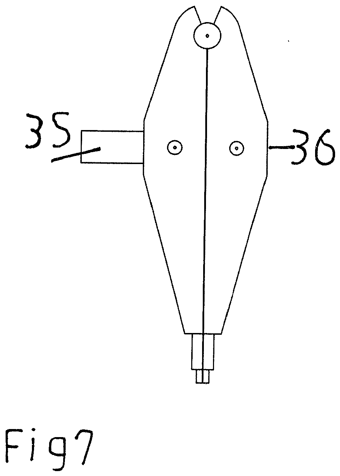

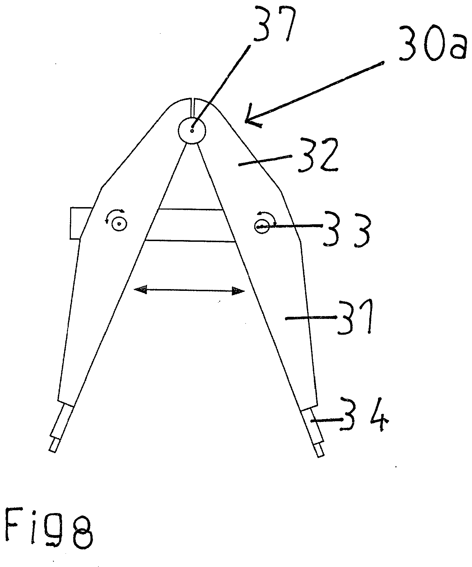

In einem anderen Ausführungsbeispiel sind an der Innenseite des Stahlbandes 4 in den Bereichen seiner beiden Enden 4a, die den Schlitz begrenzen, Nocken 6 angeformt, die als Ansatz für die beiden Zangenschenkel 31 mit ihren Greifklauen 34 der leicht handhabbaren Spreizschere 30a dienen. Die Spreizschere 30a ist als eine Scharnierzange ausgebildet mit zwei Zangenschenkeln 31, welche in Schenkel 32 übergehen, wobei die zwischen den Zangenschenkeln 31 und den Schenkeln 32 angeordneten Übergangsbereiche 36 miteinander mittels eines Scharniers 37 drehbar verbunden sind. Die Übergangsbereiche 36 sind innenseitig miteinander über eine hydraulisch wirkende Zylinder-Kolbe-Einrichtung 35 über ein Gelenk 33 verbunden, welche den Abstand der Zangenschenkel 31 mit ihren Greifklauen 34 zum Auseinanderspreizen der Enden 4a des Stahlbandes 4 ansteuert. Die erfindungsgemäße Spreizzange 30a wird mit ihren Greifklauen 34 an die Nocken 6 des Stahlbandes 4 angesetzt und der Kolben in der Zylinder-Kolben-Einrichtung 35 soweit bewegt, dass die Enden 4a des Stahlbandes 4 hinreichend weit voneinander gespreizt werden (Fig. 7, Fig. 8).

Die erfindungsgemäße dauerhafte hochbelastbare Rohrverbindung zwischen zwei Abwasserrohrenden umfasst eine in dem Druckübertragungsring 1 als Druckübertragungseinrichtung ausgefräste Aufnahmenut 23a mit einem zwischen dem Spitzende 1a und der Muffe 1c angeordneten hölzernen Druckübertragungsring 1, den in die Aufnahmenut 23a eingesetzten Dichtungsschlauch 3, das kraftbeaufschlagt gegen den Dichtungsschlauch 3 angesetzte ringförmige in Umlaufrichtung quer geschlitzte Stahlband 4, dessen Enden 4a Stoß auf Stoß einander anliegen oder zwischen denen 4a das Formstück 7 Stoß auf Stoß angeordnet ist. Zudem ist in einem anderen Ausführungsbeispiel das elastische abdichtende Dichtungsmaterial in dem von dem Spitzende 1a und der Muffe 1c ausgebildeten Zwischenraum 12 polymerisiert; in einem zusätzlichen Ausführungsbeispiel ist zusätzlich ein Bohrloch 10, welches sich von dem Inneren des einen Abwasserrohrs durch dessen Spitzende 1a bis zu dem von den zwei zwischen dem Spitzende 1a und der Muffe 1c angeordneten voneinander beabstandeten Dichtungsringen 14 ausgebildeten Innenraum 11 getrieben zur Überprüfung der Abdichtung des Zwischenraums. 12, z.B. mittels einer herkömmlichen Druckmesseinrichtung (Fig. 1).

Das erfindungsgemäße leicht durchführbare, kostengünstige Verfahren zum dauerhaften Abdichten einer Muffenverbindung zwischen zwei flüssige Medien führenden Rohre, wie begehbaren Abwasserrohren zeichnet sich aus durch
die dauerhafte Abdichtung der Muffenverbindung,
das Unterdrücken der Versickerung der in den Rohrleitungen bewegten Abwässer,
die Beachtung des hohen Umweltbewusstseins und der Vermeidung der Umweltbelastung,
den Entfall der dauernden Überwachung der Abdichtung,
die Toleranz der Abdichtung gegenüber aggressiven Abwässern,
den geringen Arbeitsaufwand,
die kostengünstige Durchführung in geschlossener Sanierungsweise,
den Entfall hoher Anforderungen an die Geschicklichkeit des Benutzers,
die Eignung für jedwede Muffenverbindung aufweisenden Rohrverbindungen,
das für den Benutzer auf leichte Weise angebotene Auseinanderspreizen der Enden des Stahlbandes mit Hilfe der leicht handhabbaren Spreizschere
sowie
das vollflächige Ansetzen gegen Spalten und Risse im Stoßbereich,
das Eindringen des Dichtungsschlauchs in Spalten und Risse im Stoßbereich,
das Vermeiden des seitlichen Austretens des Dichtungsschlauches infolge Überdrucks in demselben,
die hohe Lebensdauer des Dichtungsschlauchs ohne Materialermüdung infolge Aufblasens desselben mittels Überdruck
und
das Vermeiden der steten und kostenträchtigen Kontrolle des Überdrucks im Dichtungsschlauch.

Durch das erfindungsgemäße Verfahren wird der Innendurchmesser der abgedichteten Rohrverbindung der einander angrenzenden oder voneinander beabstandeten Rohrenden nicht verringert, so dass das Anström- und Abströmverhalten der in den Rohren geführten flüssigen Medien, wie Abwässer, sich nicht verändert.

Schließlich tritt durch das erfindungsgemäße Verfahren infolgedessen keine Strömungserhöhung der im Bereich der Rohrverbindung der einander angrenzenden oder voneinander beabstandeten Rohrenden führenden flüssigen Medien im Gegensatz zu mit Hilfe von herkömmlichen Verfahren sanierten Rohrverbindungen ein, die infolge der Abdichtung den Innendurchmesser oder die lichte Weite der abgedichteten Rohrverbindung deutlich verringern.

Des Weiteren wird durch das erfindungsgemäße Verfahren die gekrümmte Rohrverbindung der einander angrenzenden oder voneinander beabstandeten Rohrenden dauerhaft abgedichtet.

Das erfindungsgemäße Verfahren dichtet die Rohrverbindung der einander angrenzenden oder voneinander beabstandeten Rohrenden ab, unabhängig davon, ob zwischen den Rohrenden z.B. von Vortriebsrohren ein Druckübertragungsring noch vorhanden ist oder ob zwischen einer Muffe und einem in der Muffe angeordnetem Spitzende ein hölzerner Abstandsring oder ein Teer getränkter Hanfstrick angeordnet oder bereits infolge Verrottung fehlt.

Gleichfalls dichtet das erfindungsgemäße Verfahren geradlinig verlaufende oder gekrümmte Rohrverbindung der einander angrenzenden oder voneinander beabstandeten Rohrenden ab, unabhängig davon, ob die Rohrenden Vortriebsrohren zuzuordnen sind oder ob das eine Rohrende dem einen Rohr mit glockenförmig ausgebildeter Muffe und das andere Rohrende dem in der Muffe angeordneten Spitzende des anderen Rohrs zugehörig sind.

Hinzutretend ist durch das erfindungsgemäße Verfahren die Rohrverbindung der einander angrenzenden oder voneinander beabstandeten Rohrenden abgedichtet, so dass mindestens ein Prüf- oder Überwachungsraum oder sogar zwei oder drei derselben bereitgestellt werden, unabhängig davon, ob die Rohrenden den Vortriebsrohren des Untertagebaus zuzuordnen sind oder ob das eine Rohrende dem einen Rohr mit glockenförmig ausgebildeter Muffe und das andere Rohrende dem in der Muffe angeordneten Spitzende des anderen Rohrs zugehörig sind.

Ebenso wird durch das erfindungsgemäße Verfahren eine Rohrverbindung der einander angrenzenden oder voneinander benachbarten Rohrenden dergestalt abgedichtet, dass mindestens ein Prüf- oder Überwachungsraum oder sogar zwei oder drei derselben bereitgestellt werden, welche zusätzlich abgedichtet werden können.

Die vorgenannten beträchtlichen Vorteile des erfindungsgemäßen Verfahrens sind auch die der erfindungsgemäßen Rohrverbindung.

### Bezugszeichenliste

- 1: Druckübertragungsring
- 1a: das eine Ende des anderen Rohres oder Spitzende
- 1c: das eine Ende des einen Rohres
- 1cc: Mantel
- 2: Mörtelmasse oder -schicht auf z.B. Druckübertragungsring
- 3: Dichtungsschlauch
- 3a: Kammer in Dichtungsschlauch
- 4: Stahlband
- 4a: Enden des Stahlbandes
- 6: Nocken
- 8: Stirnseite eines Spitzendes
- 8a: Muffengrund oder Muffenspiegel
- 9: Stirnseite des Spitzendes
- 10: Bohrloch
- 11: Innenraum
- 12: Zwischenraum
- 14: Dichtungsring
- 23: Nutgrund
- 23a: Aufnahmenut
- 30: Abstandshalter
- 30a: Spreizschere
- 31: Zangenschenkel
- 32: Schenkel
- 33: Gelenk
- 34: Greifklauen
- 35: Zylinder-Kolbe-Einrichtung
- 36: Übergangsbereich
- 37: Scharnier
- 40: Stoßfuge oder -bereich
- 41: Abbruchabschnitt
- 41a: Nutflanke
- 41b: Mörtelschicht der Nutflanke
- 42: Muffe
- 50: Prüfnadel
- 60: Anker

## Patentansprüche

1. Verfahren zum dauerhaften Abdichten einer Rohrverbindung zwischen zwei flüssige Medien führenden Rohren, durch
Einsetzen eines Dichtungsschlauches (3) in eine in einem Stoßbereich (40) von Enden (1a, 1c) der Rohre angeordnete Aufnahmenut (23a),
Ansetzen eines ringförmig ausgestalteten, in Umfangsrichtung quer geschlitztes Stahlbandes (4) mit zwei Enden (4a) als Widerlager gegen den Dichtungsschlauch (3),
**gekennzeichnet durch**
Auseinanderspreizen der Enden (4a) des Stahlbandes (4) voneinander zwecks Beaufschlagung des Dichtungsschlauches (3) mit einer Kraft
sowie
Verbinden der Enden (4a) des kraftbeaufschlagten Stahlbandes (4) durch Ansetzen der Enden (4a) des Stahlbandes (4) aneinander Stoß auf Stoß oder Einsetzen eines Formstücks (7) zwischen die Enden (4a) desselben Stoß auf Stoß.

2. Verfahren zum dauerhaften Abdichten einer Rohrverbindung als Muffenverbindung zwischen zwei flüssige Medien führenden Rohren nach Anspruch 1, **gekennzeichnet durch** vor dem
Einsetzen des Dichtungsschlauches (3) in die Aufnahmenut (23a) erfolgendes
Abtragen eines zwischen einem Ende (1a) des anderen Rohres und einem Ende (1c) des einen Rohres angeordneten Druckübertragungsrings (1) oder zumindest eines Teils desselben und eines Teils zumindest eines Endes (1a, 1c) der Rohre als Abbruchabschnitt (41) zur Bereitstellung einer Aufnahmenut (23a) zum Einsetzen eines Dichtungsschlauchs (3) in dieselbe,
Auftragen einer Mörtelmasse (2) auf den Druckübertragungsring (1) und auf mindestens eine der Nutflanken (41a) des Abbruchabschnitts (41) zur Bereitstellung einer glatten Oberfläche.

3. Verfahren zum dauerhaften Abdichten einer Rohrverbindung als Muffenverbindung zwischen zwei flüssige Medien führenden Rohren nach Anspruch 1, **gekennzeichnet durch** form-, reib- und/oder kraftschlüssiges Verbinden der Enden (4a).

4. Verfahren zum dauerhaften Abdichten einer Rohrverbindung zwischen zwei flüssige Medien führenden Rohren nach einem der Ansprüche 1 bis 3, **gekennzeichnet durch** Eintreiben eines radial verlaufenden Bohrlochs (10) von dem Inneren aus nach außen durch das eine Ende (1a) als Spitzende des anderen Abwasserrohres in einen Innenraum (11), der von zwei auf dem Spitzende angeordneten Dichtungsringen (14) ausgebildet oder begrenzt ist zur Überprüfung der Abdichtung des die Enden (1a, 1c) überbrückenden Spalts.

5. Verfahren zum dauerhaften Abdichten einer Rohrverbindung zwischen zwei, vorzugsweise flüssige Medien führenden, Rohre, wie begehbaren Abwasserrohren, nach einem der vorhergehenden Ansprüche **gekennzeichnet durch** Einspritzen eines flüssigen polymerisierbaren elastisch verbleibenden Dichtungsmaterials in einen Zwischenraum (12), der zwischen dem Spitzende (1a), einer Muffe (42) oder einem Mantel (1cc) und einem von der Stirnseite (9) abgewandten Dichtungsring (14) ausgebildet oder begrenzt ist.

6. Verfahren zum dauerhaften Abdichten einer Rohrverbindung zwischen zwei flüssige Medien führenden Rohren nach Anspruch 4, **gekennzeichnet durch** Einspritzen eines flüssigen polymerisierbaren elastisch verbleibenden Dichtungsmaterials in den von zwei auf dem Spitzende (1a) angeordneten Dichtungsringen (14) und der Muffe (42) oder dem Mantel (1cc) ausgebildeten Innenraum (11) zur Abdichtung des Innenraums (11).

7. Verfahren zum dauerhaften Abdichten einer Rohrverbindung zwischen zwei, vorzugsweise flüssige Medien führenden, Rohre, wie begehbaren Abwasserrohren, nach einem der vorhergehenden Ansprüche, **dadurch gekennzeichnet, dass** die Enden (4a) des Stahlbandes (4) mittels einer Spreizschere (30a) so weit auseinandergespreizt werden, dass entweder die Enden (4a) kraftbeaufschlagt Stoß an Stoß bzw. Stoß auf Stoß anliegen oder zwischen die gegenüber liegenden Enden (4a) des Stahlbandes (4) das stahlbandartige Formstück (7) eingesetzt wird, gleichfalls Stoß auf Stoß, wobei an der Innenseite des Stahlbandes (4) in den Bereichen seiner beiden Enden (4a), die den Schlitz begrenzen, Nocken (6) angeformt sind, die als Ansatz für die beiden Zangenschenkel (31) mit ihren Greifklauen (34) der Spreizschere (30a) dienen, die Spreizschere (30a) als eine Scharnierzange ausgebildet ist mit den zwei Zangenschenkeln (31), welche in Schenkel (32) übergehen, die zwischen den Zangenschenkeln (31) und den Schenkeln (32) angeordneten Übergangsbereiche (36) miteinander mittels eines Scharniers (37) drehbar verbunden sind, die Übergangsbereiche (36) innenseitig miteinander über eine hydraulisch wirkende Zylinder-Kolben-Einrichtung (35) über ein Gelenk (33) verbunden sind, welche den Abstand der Zangenschenkel (31) mit ihren Greifklauen (34) zum Auseinanderspreizen der Enden (4a) des Stahlbandes (4) ansteuert.

8. Dauerhafte hoch belastbare Rohrverbindung bestehend aus zwei Abwasserrohrenden mit einer in einem Druckübertragungsring (1) als Druckübertragungseinrichtung ausgefrästen Aufnahmenut (23a) und einem zwischen einem Spitzende (1a) und einer Muffe (42) angeordneten Druckübertragungsring (1) und einem in die Aufnahmenut (23a) eingesetzten Dichtungsschlauch (3),
**gekennzeichnet durch**
ein kraftbeaufschlagt gegen den Dichtungsschlauch (3) angesetztes ringförmiges in Umlaufrichtung quer geschlitztes Stahlband (4),
dessen Enden (4a) miteinander verbunden sind, wobei die Enden (4a) des Stahlbandes (4) Stoß auf Stoß oder ein Formstück (7) zwischen den Enden (4a) desselben Stoß auf Stoß angeordnet sind,
ein elastisches Dichtungsmaterial, welches in einem von dem Spitzende (1a), der Muffe (42) oder einem Mantel (1cc) und von einem von der Stirnseite (9) abgewandten auf dem Spitzende angeordneten Dichtungsring (14) ausgebildeten Zwischenraum (12) sich befindet.

9. Dauerhafte hoch belastbare Rohrverbindung zwischen zwei Abwasserrohrenden nach Anspruch 8, **gekennzeichnet durch** ein Ansetzen des Mantels (1cc) gegen zumindest ein als Spitzende ausgestaltetes Ende (1a, 1c) eines Rohrs als Vortriebsrohr Fläche auf Fläche.

10. Dauerhafte hoch belastbare Rohrverbindung zwischen zwei Abwasserrohrenden nach Anspruch 8 oder 9, **gekennzeichnet durch** ein Bohrloch (10), welches sich von dem Inneren eines Rohrs durch dessen Spitzende (1a) bis zu einem von zwei zwischen dem Spitzende (1a) und der Muffe (42) oder dem Mantel (1cc) angeordneten voneinander beabstandeten Dichtungsringen (14) ausgebildeten Innenraum (11) zur Überprüfung der Abdichtung des Zwischenraums (12) erstreckt.

11. Dauerhafte hoch belastbare Rohrverbindung zwischen zwei Abwasserrohrenden nach einem der Ansprüche 8 bis 10, **gekennzeichnet durch** ein elastisches Dichtungsmaterial in einem zwischen zwei zwischen dem Spitzende (1a) und der Muffe (42) oder dem Mantel (1cc) angeordneten voneinander beabstandeten Dichtungsringen (14) ausgebildeten Innenraum (11).

## Claims

1. A method for permanently sealing a pipe joint between two pipes carrying liquid media, by
inserting a sealing tube (3) into a receiving groove (23a) arranged in an abutment region (40) of ends (1a, 1c) of the pipes,
placing an annularly configured steel strip (4), slotted transversely in the circumferential direction with two ends (4a), as a counter bearing against the sealing tube (3),
**characterised by** spreading the ends (4a) of the steel strip (4) apart from one another for the purpose of applying a force to the sealing tube (3)
and
joining the ends (4a) of the steel strip (4), which has had force applied to it, by placing the ends (4a) of the steel strip (4) against one another butt on butt or inserting a moulding (7) between the ends (4a) thereof butt on butt.

2. The method for permanently sealing a pipe joint as a socket joint between two pipes carrying liquid media according to Claim 1, **characterised by**, prior to the insertion of the sealing tube (3) into the receiving groove (23a), carrying out removal of a pressure transmission ring (1) arranged between one end (1a) of the other pipe and one end (1c) of one pipe or at least one part thereof and one part of at least one end (1a, 1c) of the pipes as a break-off section (41) to provide a receiving groove (23a) for insertion of a sealing tube (3) thereinto, applying a mortar composition (2) to the pressure transmission ring (1) and to at least one of the groove flanks (41a) of the break-off section (41) to provide a smooth surface.

3. The method for permanently sealing a pipe joint as a socket joint between two pipes carrying liquid media according to Claim 1, **characterised by** positive, frictional and/or non-positive joining of the ends (4a).

4. The method for permanently sealing a pipe joint between two pipes carrying liquid media according to any one of Claims 1 to 3, **characterised by** driving a radially running bore hole (10) in from the inside to outside through one end (1a) as a pointed end of the other wastewater pipe into an interior (11), which is formed or delimited by two sealing rings (14) arranged on the pointed end, to check the sealing of the gap bridging the ends (1a, 1c).

5. The method for permanently sealing a pipe joint between two pipes, preferably carrying liquid media, such as wastewater pipes which can be walked on, according to any one of the preceding claims, **characterised by** injecting a liquid polymerisable elastically stable sealing material into an intermediate space (12), which is formed or delimited between the pointed end (1a), a socket (42) or a jacket (1cc) and a sealing ring (14) remote from the end face (9).

6. The method for permanently sealing a pipe joint between two pipes carrying liquid media according to Claim 4, **characterised by** injecting a liquid polymerisable elastically stable sealing material into the interior (11) formed by two sealing rings (14) arranged on the pointed end (1a) and the socket (42) or the jacket (1cc), to seal the interior (11).

7. The method for permanently sealing a pipe joint between two pipes, preferably carrying liquid media, such as wastewater pipes which can be walked on, according to any one of the preceding claims, **characterised in that** the ends (4a) of the steel strip (4) are spread apart from one another by means of an expanding scissor-like assembly (30a) until either the ends (4a) lie against one another non-positively butt to butt or butt on butt or the steel-strip-like moulding (7) is inserted between the opposite ends (4a) of the steel strip (4), likewise butt on butt, wherein, on the inner side of the steel strip (4) in the regions of its two ends (4a), which delimit the slot, cams (6) are overmoulded, which cams (6) serve as an attachment for the two pincer limbs (31) with their gripping claws (34) of the expanding scissor-like assembly (30a), the expanding scissor-like assembly (30a) is formed as a hinged pincer with the two pincer limbs (31), which transition into limbs (32), the transition regions (36) arranged between the pincer limbs (31) and the limbs (32) are rotatably joined to one another by means of a hinge (37), the transition regions (36) are joined to one another on the inside via a hydraulically acting cylinder-piston mechanism (35) via an articulation (33), which hydraulically acting cylinder-piston mechanism (35) controls the spacing of the pincer limbs (31) with its gripping claws (34) for spreading the ends (4a) of the steel strip (4) apart.

8. A permanent, highly stressable pipe joint consisting of two wastewater pipe ends with a receiving groove (23a) milled out as a pressure transmission mechanism in
a pressure transmission ring (1) and a pressure transmission ring (1) arranged between a pointed end (1a) and a socket (42) and a sealing tube (3) inserted into the receiving groove (23a), **characterised by**
an annular steel strip (4) which is placed against the sealing tube (3) with the application of force and which is transversely slotted in the circumferential direction, the ends (4a) of which are joined to one another, wherein the ends (4a) of the steel strip (4) are arranged butt on butt or a moulding (7) is arranged between the ends (4a) thereof butt on butt,
an elastic sealing material, which is located in an intermediate space (12) formed by the pointed end (1a), the socket (42) or a jacket (1cc) and by a sealing ring (14) arranged on the pointed end and remote from the end face (9).

9. The permanent, highly stressable pipe joint between two wastewater pipe ends according to Claim 8, **characterised by** placing the jacket (1cc) against at least one end (1a, 1c), configured as a pointed end, of a pipe as a driving pipe surface on surface.

10. The permanent, highly stressable pipe joint between two wastewater pipe ends according to Claim 8 or 9, **characterised by** a bore hole (10), which extends from the interior of a pipe through the pointed end (1a) thereof as far as an interior (11) formed by two sealing rings (14) arranged spaced apart from one another between the pointed end (1a) and the socket (42) or the jacket (1cc), to check the sealing of the intermediate space (12).

11. The permanent, highly stressable pipe joint between two wastewater pipe ends according to any one of Claims 8 to 10, **characterised by** an elastic sealing material in an interior (11) formed between two sealing rings (14) arranged spaced apart from one another between the pointed end (1a) and the socket (42) or the jacket (1cc).

## Revendications

1. Procédé d'étanchéification durable d'une liaison de tubes entre deux tubes conduisant des milieux liquides, par
insertion d'une gaine d'étanchéité (3) dans une rainure de logement (23a) disposée dans la zone de jonction (40) des extrémités (1a, 1c) des tubes,
pose d'une bande d'acier (4) de forme annulaire et fendue transversalement dans la direction de la circonférence, avec deux extrémités (4a) en tant que contre-palier contre la gaine d'étanchéité (3),
**caractérisé par**
l'écartement des extrémités (4a) de la bande d'acier (4) entre elles pour exercer une force sur la gaine d'étanchéité (3),
ainsi que
la liaison des extrémités (4a) de la bande d'acier (4) sur laquelle est exercée une force par application des extrémités (4a) de la bande d'acier (4) l'une contre l'autre par aboutement ou l'insertion d'une pièce moulée (7) entre les extrémités (4a) par aboutement.

2. Procédé d'étanchéification durable d'une liaison de tubes en tant que liaison par manchon entre deux tubes conduisant des milieux liquides selon la revendication 1, **caractérisé par** l'enlèvement, avant l'insertion de la gaine d'étanchéité (3) dans la rainure de logement (23a), d'une bague de transmission de pression (1) disposée entre une extrémité (1a) de l'autre tube et une extrémité (1c) d'un tube ou d'au moins une partie de celle-ci et d'une partie d'au moins une extrémité (1a, 1c) des tubes en tant que portion de rupture (41) pour la réalisation d'une rainure de logement (23a) pour l'insertion d'une gaine d'étanchéité (3) dans celle-ci,
application d'une masse de mortier (2) sur la bague de transmission de pression (1) et sur au moins un des flancs de rainure (41a) de la portion de rupture (41) pour la réalisation d'une surface lisse.

3. Procédé d'étanchéification durable d'une liaison de tubes en tant que liaison par manchon entre deux tubes conduisant des milieux liquides selon la revendication 1, **caractérisé par** la liaison par complémentarité de forme, par friction et/ou par force des extrémités (4a).

4. Procédé d'étanchéification durable d'une liaison de tubes entre deux tubes conduisant des milieux liquides selon l'une des revendications 1 à 3, **caractérisé par** l'enfoncement d'un trou de perçage (10) s'étendant radialement de l'intérieur vers l'extérieur à travers une extrémité (1a) en tant qu'extrémité pointue de l'autre tuyau d'eaux usées vers un espace intérieur (11), qui est constitué ou limité par deux bagues d'étanchéité (14) disposées sur l'extrémité pointue, pour le contrôle de l'étanchéification de l'interstice entre les extrémités (1a, 1c).

5. Procédé d'étanchéification durable d'une liaison de tubes entre deux tubes conduisant de préférence des milieux liquides, comme des tuyaux d'eaux usées praticables, selon l'une des revendications précédentes, **caractérisé par** l'injection d'un matériau d'étanchéité liquide polymérisable restant élastique dans un espace intermédiaire (12) qui est réalisé ou limité entre l'extrémité pointue (1a), un manchon (42) ou une enveloppe externe (1cc) et une bague d'étanchéité (14) opposée à la face frontale (9).

6. Procédé d'étanchéification durable d'une liaison de tubes entre deux tubes conduisant des milieux liquides selon la revendication 4, **caractérisé par** l'injection d'un matériau d'étanchéité liquide polymérisable restant élastique dans l'espace intérieur (11) constitué par deux bagues d'étanchéité (14) disposées sur l'extrémité pointue (1a) et le manchon (42) ou l'enveloppe externe (1cc), pour l'étanchéification de l'espace intérieur (11).

7. Procédé d'étanchéification durable d'une liaison de tubes entre deux tubes conduisant de préférence des milieux liquides, comme des tuyaux d'eaux usées praticables, selon l'une des revendications précédentes, **caractérisé en ce que** les extrémités (4a) de la bande d'acier (4) sont écartées l'une de l'autre au moyen d'une cisaille d'écartement (30a) jusqu'à ce que soit les extrémités (4a) s'appuient bout à bout respectivement bout sur bout soit la pièce moulée (7) ayant la forme de la bande d'acier soit insérée entre les extrémités (4a) opposées de la bande d'acier, également bout sur bout, dans lequel, sur le côté intérieur de la bande d'acier (4), au niveau de ses deux extrémités (4a), qui délimitent la fente, sont moulées des cames (6) qui servent d'embout pour les deux branches de pince (31) avec leurs mâchoires de préhension (34) de la cisaille d'écartement (30a), la cisaille d'écartement (30a) est conçue comme une pince à charnières avec les deux branches de pince (31), qui se transforment progressivement en branches (32), les zones de transition (36) disposées entre les branches de pince (31) et les branches (32) sont reliées entre elles de manière rotative au moyen d'une charnière (37), les zones de transition (36) sont reliées, à l'intérieur, entre elles par l'intermédiaire d'un dispositif à cylindre et piston hydraulique (35) par l'intermédiaire d'une articulation (33), qui contrôle la distance entre la branche de pince (31) et ses mâchoires de préhension (34) pour l'écartement des extrémités (4a) de la bande d'acier (4).

8. Liaison de tubes durable haute résistance constituée de deux extrémités de tuyaux d'eaux usées avec une rainure de logement (23a) fraisée dans une bague de transmission de pression (1) en tant que dispositif de transmission de pression et une bague de transmission de pression (1) disposée entre une extrémité pointue (1a) et un manchon (42) et une gaine d'étanchéité (3) insérée dans la rainure de logement (23a),
**caractérisé par**
une bande d'acier (4) annulaire fendue transversalement dans la direction de la circonférence, posée avec l'application d'une force contre la gaine d'étanchéité (3), dont les extrémités (4a) sont reliées entre elles, dans lequel les extrémités (4a) de la bande d'acier (4) sont disposées en aboutement ou une pièce moulée (7) est disposée en aboutement entre les extrémités (4a) de celle-ci,
un matériau d'étanchéité élastique qui se trouve dans un espace intermédiaire (12), constitué de l'extrémité pointue (1a), du manchon (42) ou d'une enveloppe externe (1cc) et d'une bague d'étanchéité (14) disposée sur l'extrémité pointue de manière opposée à la face frontale (9).

9. Liaison de tubes durable haute résistance entre deux extrémités de tuyaux d'eaux usées selon la revendication 8, **caractérisé par** une pose de l'enveloppe externe (1cc) contre au moins une extrémité (1a, 1c), conçue comme une extrémité pointue, d'un tube en tant que tuyau de fonçage surface contre surface.

10. Liaison de tubes durable haute résistance entre deux extrémités de tuyaux d'eaux usées selon la revendication 8 ou 9, **caractérisé par** un trou de perçage (10) qui s'étend de l'intérieur d'un tube à travers son extrémité pointue (1a) jusqu'à un espace intérieur (11) constitué de deux bagues d'étanchéité (14) distantes entre elles disposées entre l'extrémité pointue (1a) et le manchon (42) ou l'enveloppe externe (1cc), pour le contrôle de l'étanchéité de l'espace intermédiaire (12).

11. Liaison de tubes durable haute résistance entre deux extrémités de tuyaux d'eaux usées selon l'une des revendications 8 à 10, **caractérisé par** un matériau d'étanchéité élastique dans un espace intérieur (11) réalisé entre deux bagues d'étanchéité (14) distantes entre elles disposées entre l'extrémité pointue (1a) et le manchon (42) ou l'enveloppe externe (1cc).
